(19) Europäisches Patentamt
European Patent Office
Office européen des brevets

(11) **EP 4 708 143 A1**

(12) **EUROPEAN PATENT APPLICATION**

(43) Date of publication:
**11.03.2026 Bulletin 2026/11**

(21) Application number: **25200406.4**

(22) Date of filing: **05.09.2025**

(51) International Patent Classification (IPC):
**G06N 3/0495** (2023.01)    **G06N 3/0464** (2023.01)
**G06N 3/084** (2023.01)

(52) Cooperative Patent Classification (CPC):
**G06N 3/0495; G06N 3/0464; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.09.2024 US 202418828005**

(71) Applicant: **Microsoft Technology Licensing, LLC**
**Redmond, WA 98052-6399 (US)**

(72) Inventors:
• **CHEN, Tianyi**
**Redmond, 98052-6399 (US)**
• **DING, Tianyu**
**Redmond, 98052-6399 (US)**
• **QU, Xiaoyi**
**Redmond, 98052-6399 (US)**
• **APONTE, David**
**Redmond, 98052-6399 (US)**
• **ZHARKOV, Ilya Dmitriyevich**
**Redmond, 98052-6399 (US)**
• **LIANG, Luming**
**Redmond, 98052-6399 (US)**

(74) Representative: **Murgitroyd & Company**
**165-169 Scotland Street**
**Glasgow G5 8PL (GB)**

(54) **JOINTLY PRUNING AND QUANTIZING A NEURAL NETWORK**

(57)    A technique jointly prunes and quantizes an original neural network. This produces a final neural network having a smaller size than the original neural network. The technique involves converting the original neural network into a quantized-preprocessed neural network by adding weight-quantization logic that simulates effects of converting weight parameters used by the original neural network into quantized weight parameters, and/or adding activation-quantization logic that simulates effects of converting activations produced by the layers of the original neural network into quantized activation information. The technique then applies an iterative training process that includes: (a) identifying a prescribed number of groups of weight parameters in a set of original groups as redundant, a remainder of the original set of groups being to-be-retained groups, and (b) determining quantization parameters that will govern quantization used in levels of the final neural network.

FIG. 1

EP 4 708 143 A1

**Description**

**BACKGROUND**

An increasing number of applications, devices, and systems incorporate the use of neural networks. Yet many neural networks include a relatively large number of trainable parameters (e.g., filter weights and biases). This factor limits the devices on which large neural networks are capable of being feasibly stored and run. For instance, a user device may lack a sufficient amount of memory to store and run a large neural network.

The industry has proposed several techniques for reducing the sizes of neural networks, including pruning and quantization. Pruning involves identifying and removing trainable parameters in a large neural network that are assessed as redundant, meaning that their omission will not significantly degrade the critical functions performed by the neural network. Quantization involves reducing the bit width of weight parameters and/or activation information used in the large neural network.

Some systems apply either pruning or quantization, but not both. Other systems have attempted to apply both pruning and quantization, e.g., by performing quantization as a separate task after the completion of pruning. These types of systems sometimes produce models having non-optimal characteristics and performance.

**SUMMARY**

A technique is described herein for jointly pruning and quantizing an original neural network. This produces a final neural network having a smaller size than the original neural network. Because of its smaller size, the final neural network consumes less memory and processing resources than the original neural network. This characteristic expands the type of devices on which a neural network is capable of being stored and run.

Joint pruning and quantization, as used herein, means that the pruning is integrated with the quantization, as opposed to being separate and independent tasks. Joint pruning and quantization produces a final neural network that uses fewer resources compared to neural networks produced by other techniques, and/or has improved performance compared to other techniques.

In some implementations, the technique includes receiving the original neural network; converting the original neural network into a quantized-preprocessed neural network by adding quantization logic to the original neural network; and identifying an original set of groups of weight parameters used by the quantized-preprocessed neural network. The technique then produces the final neural network by applying an iterative training process that includes steps of: (a) identifying a prescribed number of groups of the original set of groups as redundant, a remainder of the original set of groups being to-be-retained groups, and (b) determining quantization parameters that govern quantization used in levels of quantized-preprocessed neural network. The redundant groups are groups in the original set of groups that are to be removed in the final neural network, and the to-be-retained groups are groups that are to be retained in the final neural network.

According to another illustrative aspect, the converting involves adding weight-quantization logic and/or activation-quantization logic that simulate effects of quantization in training. That is, an instance of weight-quantization logic is used to simulate effects of converting weight parameters used by a component of the neural network (e.g., a convolutional component) to quantized weight parameters. An instance of activation logic is used to simulate effects of converting an activation produced by a component of the neural network (e.g., an ReLU component) to quantized activation information.

According to another illustrative aspect, the technique further includes determining bit widths used by the levels of the final neural network based on the quantization parameters that have been determined.

According to another illustrative aspect, the iterative training is preceded by preparatory training in which the original neural network is trained without pruning, and followed by post-processing in which the to-be-retained groups are trained without performing further pruning. In some implementations, the preparatory training updates a quantization step size parameter by restricting its values to a region defined by permissible quantization step sizes.

According to another illustrative aspect, the iterative training process includes successively projecting the redundant groups to an origin point and successively transferring information contained in the redundant groups to the to-be-retained groups. The projecting is governed by a forget rate that itself depends on the quantization parameters.

The above-summarized technique is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

## BRIEF DESCRIPTION OF DRAWINGS

Fig. 1 shows a computing system for jointly pruning and quantizing an original neural network.

Fig. 2 shows an example of an original neural network prior to processing by the computing system of Fig. 1.

Fig. 3 shows a final neural network produced by the computing system of Fig. 1, based on the original neural network of Fig. 2.

Fig. 4 shows an example of the operation of a quantization-preprocessing component, which is part of the computing system of Fig. 1.

Fig. 5 shows a process performed by a group-identifying component, which is another part of the computing system of Fig. 1.

Fig. 6 shows an example of the node-grouping behavior of the group-identifying component of the computing system of Fig. 1.

Fig. 7 shows an example of the node-merging behavior of the group-identifying component of the computing system of Fig. 1.

Fig. 8 shows an example of the formation of weight groups by the group-identifying component of Fig. 1. Each weight group includes a collection of weight parameters.

Fig. 9 shows an overview of a joint pruning and quantization (PQ) component, which is another part of the computing system of Fig. 1.

Fig. 10 depicts stages of processing performed by the joint PQ component of Fig. 9.

Fig 11 is a flowchart that shows one manner of operation of the joint PQ component of Fig. 9.

Fig. 12 is a vehicle for explaining the behavior of the flowchart of Fig. 11. It specifically shows second-derivative relationships between a parameter, a quantized counterpart of the parameter, and an objective function.

Fig. 13 is a flowchart that provides an overview of a partially projected gradient descent (PPSG) operation performed in the flowchart of Fig. 11.

Fig. 14 shows an example of standard Stochastic Gradient Descent, while Fig. 15 shows an example of the PPSG operation summarized in Fig. 13.

Fig. 16 is a graphical illustration of an updating operation performed by the joint PQ component of Fig. 9, applied to parameters of an important group.

Fig. 17 is a graphical illustration of an updating operation performed by the joint PQ component of Fig. 9, applied to parameters of a redundant group.

Fig. 18 describes the performance results provided by the computing system of Fig. 1, compared to the performance of other systems.

Figs. 19-23 are flowcharts that describe three aspects of the operation of the computing system of Fig. 1.

Fig. 24 shows computing equipment that, in some implementations, is used to implement the computing system of Fig. 1.

Fig. 25 shows an illustrative type of computing system that, in some implementations, is used to implement any aspect of the features shown in the foregoing drawings.

The same numbers are used throughout the disclosure and figures to reference like components and features.

## DETAILED DESCRIPTION

A. Overview

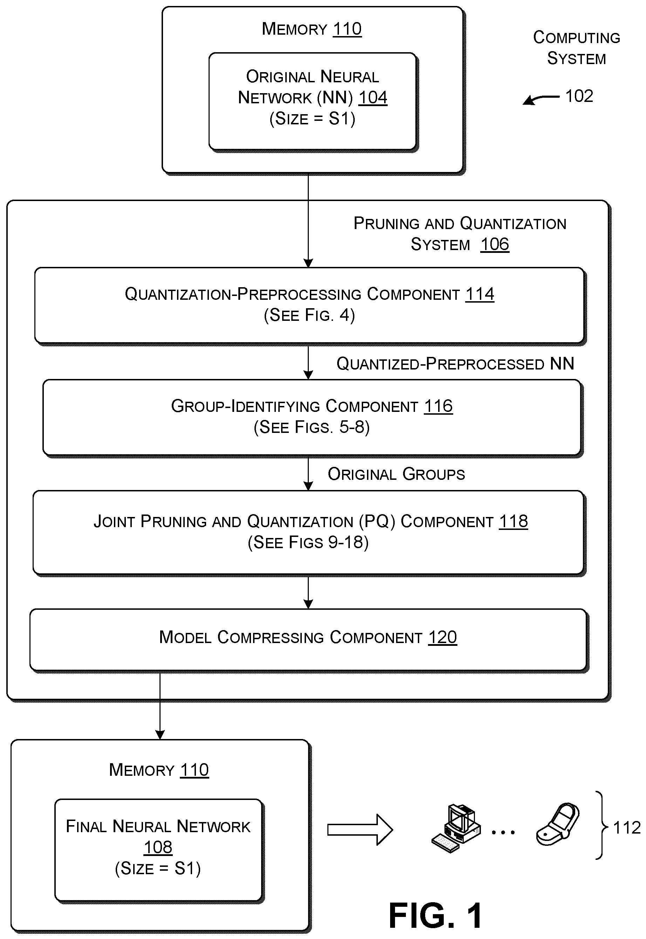

Fig. 1 shows a computing system 102 for operating on an original neural network 104 having plural layers. The computing system 102 is capable of operating on original neural networks with weights that have been subject to any amount of pretraining, including no pretraining. A pruning and quantization system 106 performs structural pruning and quantization on the original neural network 104, to produce a final neural network 108. Structural pruning is pruning that identifies structures of the original neural network 104 that are capable of being removed without adversely affecting the functions performed by the original neural network 104. The computing system 102 then removes these structures, e.g., by removing the weight parameters associated with these structures. Weight parameters, for instance, include filter weights and biases associated with individual components of the original neural network 104. Quantization is an operation that quantizes the weight parameters and/or activations of the original neural network 104, with the objective of reducing the bit width used in different layers of the original neural network 104. An activation refers to information produced at the output of a layer of the original neural network. An activation, for instance, refers to the information produced by an activation function (e.g., an ReLU) of original neural network 104. (ReLU is an acronym for rectifier linear unit.)

More generally, for at least some cases, a parameter is a variable that, at any given time, has a specific value. Reference to a "parameter" herein is shorthand reference to a "parameter value," unless the text otherwise clarifies. For instance, when it is appropriate to emphasize the variable associated with a parameter in a more general way, the explanation will refer to a parameter variable or the like.

The original neural network 104 has a first size and the final neural network 108 has a second size that is less than the first size. Accordingly, the final neural network 108 consumes less memory 110 than the original neural network 104. Further, the execution of the final neural network 108 involves fewer operations compared to the original neural network 104. These factors expand the type of devices 112 that are capable of feasibly implementing the final neural network 108. For instance, a user device having relatively modest memory and processing resources is capable of running the final neural network 108.

In some implementations, the computing system 102 includes a quantization-preprocessing component 114 for transforming the original neural network 104 into a quantized-processed neural network. The quantization-processing component 114 performs this task by injecting quantization logic in the original neural network 104 that simulates effects of quantization during training. For example, a first kind of quantization node simulates effects of converting floating point weight parameters used by a component of the neural network into quantized weights. A second kind of quantization node simulates effects of converting floating point activations produced by an activation function into quantized activation information.

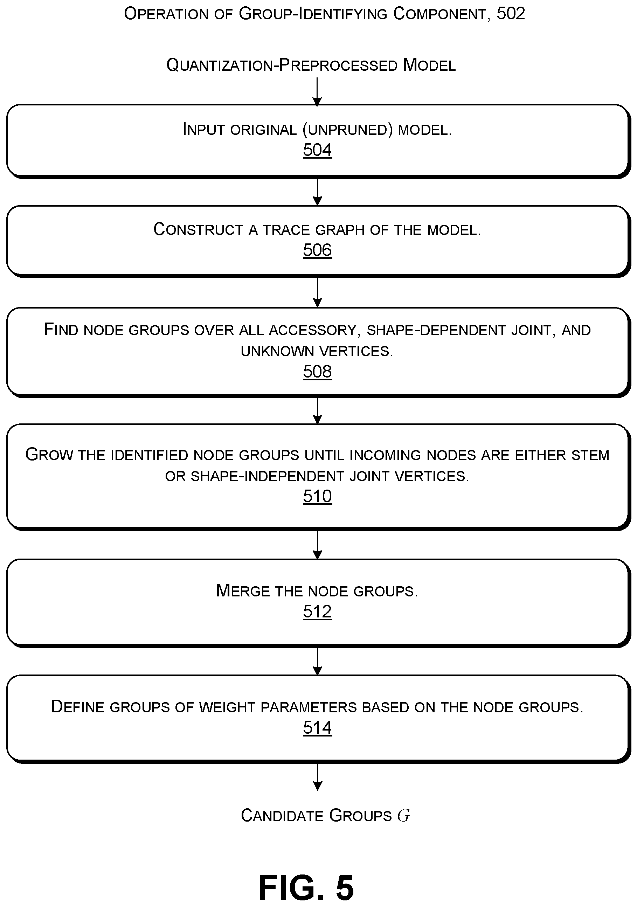

A group-identifying component 116 identifies G groups of trainable weight parameters that are candidates for removal. Each such group is associated with a part of the structure of the original neural network 104. Additional information regarding one implementation of the group-identifying component 116 is set forth below in the context of the explanation of Figs. 5-8.

A joint pruning and quantization (PQ) component 118 jointly prunes and quantizes the quantized-preprocessed neural network. (As mentioned above, to say that two operations are jointly performed means that the two operations are integrated or fused together in an interdependent way, rather than performing these operations in an independent manner.) More specifically, the joint PQ component 118 performs pruning of the original neural network 104 by identifying K groups of trainable parameters to be removed, selected from the G groups. The quantization operation determines the bit widths used in the final neural network 108. More formally stated, the purpose of the joint PQ component 118 is to minimize an objective function $f(x)$, subject to the constraint that the number of groups of trainable parameters is reduced by a target number K, and the bit width of each layer i varies between a lower-bound bit width ($b_L$) and an upper-bound bit width ($b_U$), e.g., where $b_L \leq b_i \leq b_U$. The objective function defines the objective of a training process. One such objective function expresses the difference between actual results produced by a neural network (in its forward pass) and expected results (given by ground-truth labels), e.g., as formulated using cross entropy or any other expression.

Redundant groups $G_R$ refer to groups that are removable without negatively impacting the functions performed by the original neural network 104). The remainder of the total number of groups G is referred to as to-be-retained groups $G_I$, or more simply, important groups. In some cases, these groups are associated with structure of the original neural network 104 that cannot be safely removed without negatively impacting the functions performed by the original neural network 104.

As will be described below, the joint PQ component 118 performs its pruning over a series of steps. Pruning involves successively projecting the trainable parameters of the redundant groups towards an origin point (e.g., zero or any other reference point). "Projecting" in this context means successively reducing the value of weight parameters to the origin (e.g., zero) over plural steps. Pruning also involves successively transferring any information expressed by the redundant groups to the important groups. This transfer is performed by training the important groups, which is interleaved with the successive projection of the redundant groups towards the origin point. That is, the training ensures that the parameters are updated such that the objective function continues to be satisfied, which has the indirect effect of transferring knowledge that was previously contained in the redundant groups to the important groups.

Quantization involves successively learning parameters that will ultimately govern the bit width selected for each layer of the neural network. These parameters are therefore referred to herein as trainable quantization parameters. For example, assume that a bit width ($b$) for use in quantizing filter weight parameters is given by:

$$b = log_2 \left\lceil \frac{(q_{s-}q_m)^t}{d} + 1 \right\rceil \qquad (1).$$

In this equation, $q_s$ and $q_m$, respectively, refer to a minimum value and maximum value to be quantized, $d$ the quantization step size that describes the size of a step between two immediately adjacent quantized values, $t$ is an exponent that governs a shape of mapping performed by Equation (1). $\lceil \cdot \rceil$, which is a pair of brackets without bottom flanges, refers to a rounding operation that rounds a value to the closest smaller integer, e.g., by converting 5.67 to 5. The

parameters $q_m$, $d$, and $t$ are examples of trainable quantization parameters herein which are successively learned. These quantization parameters are injected into the original neural network 104 by adding quantization logic to the original neural network 104 by the quantization-preprocessing component 114.

The joint PQ component 118 quantizes parameters during training using the quantization parameters described above. For instance, in one implementation, the joint PQ component 118 quantizes the parameter $x_k$ at a step $k$ as follows:

$$x_k^Q = \text{sgn}(x_k) \cdot \begin{cases} 0, & \text{for } |x_k| < q_s \\ d \left\lfloor \dfrac{(|x_k| - q_s)^t}{d} \right\rceil, & \text{for } q_s \leq |x_k| \leq q_m \\ d \left\lfloor \dfrac{(q_m - q_s)^t}{d} \right\rceil, & \text{for } |x_k| > q_m \end{cases} \qquad (2).$$

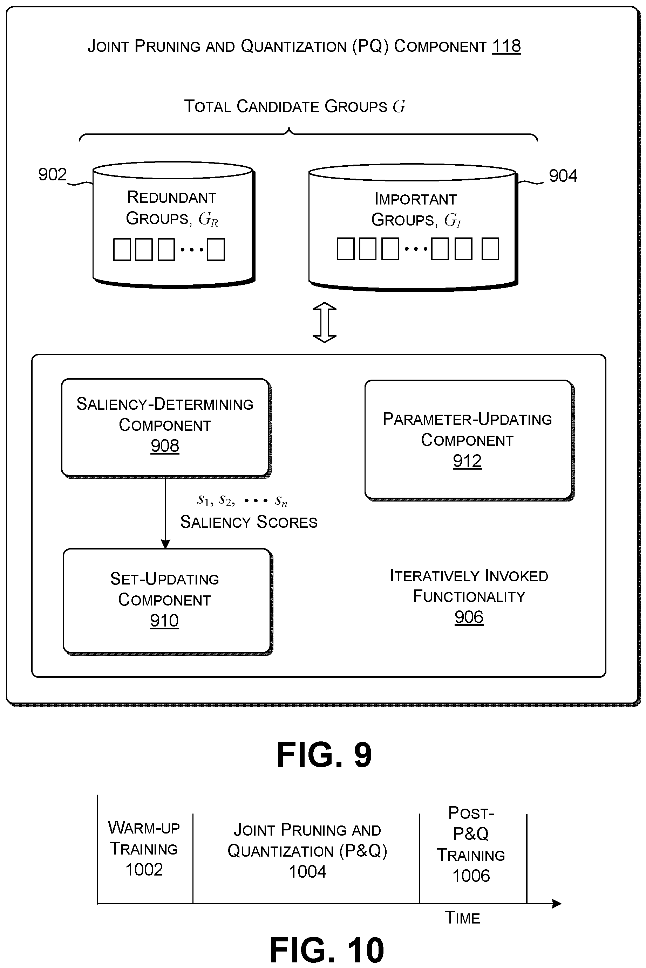

In this equation, sgn returns the sign of a number, $\lfloor \cdot \rceil$ is rounding operation, which rounds to the nearest integer, and $|\cdot|$ returns the absolute value. Additional information regarding the operation of the joint PQ component 118 is set forth below with respect to Figs. 9-20.

A model compressing component 120 formally removes the groups of parameters that are identified as redundant. Removal involves actually eliminating the parameters of the redundant groups or zeroing the parameters out for the removed structures. In addition, the model compressing component 120 implements whatever layer-specific quantization has been determined. This involves, for example, converting parameter weights used by a filter at a particular layer to quantized counterparts having the bit width that has been selected.

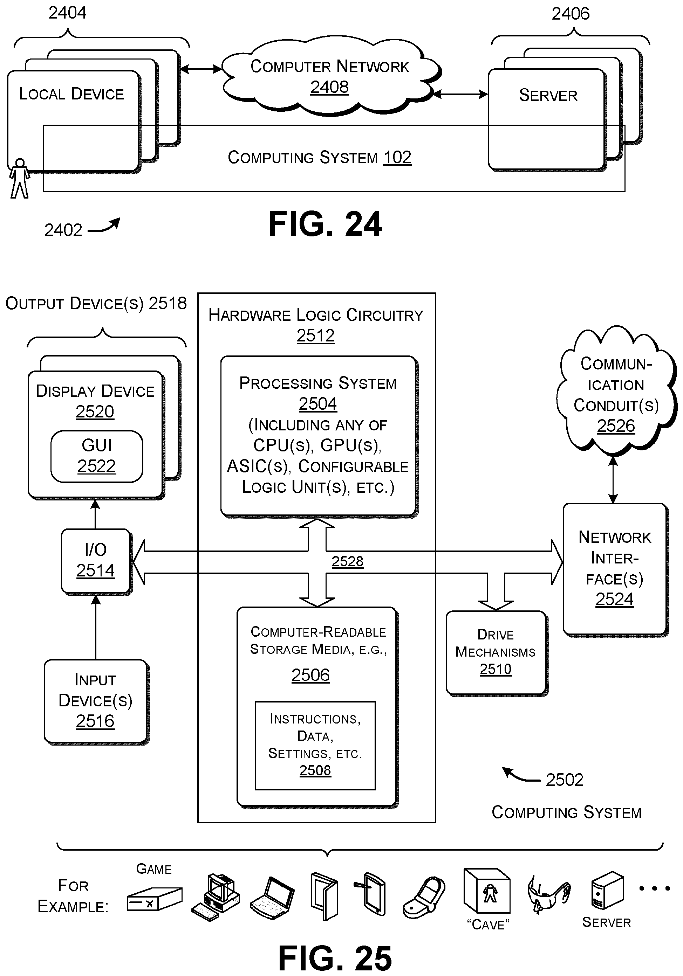

The following terminology is relevant to some examples presented below in the remaining sections. A "machine-trained model" or "model" refers to computer-implemented logic for executing a task using machine-trained parameters that are produced in a training operation. A neural network is an example of a model. A trainable parameter refers to any type of value that can be changed to iteratively adjust the performance of the model. In some contexts, terms such as "component," "module," "engine," and "tool" refer to parts of computer-based technology that perform respective functions. Figs. 24 and 25, described below, provide examples of illustrative computing equipment for performing these functions.

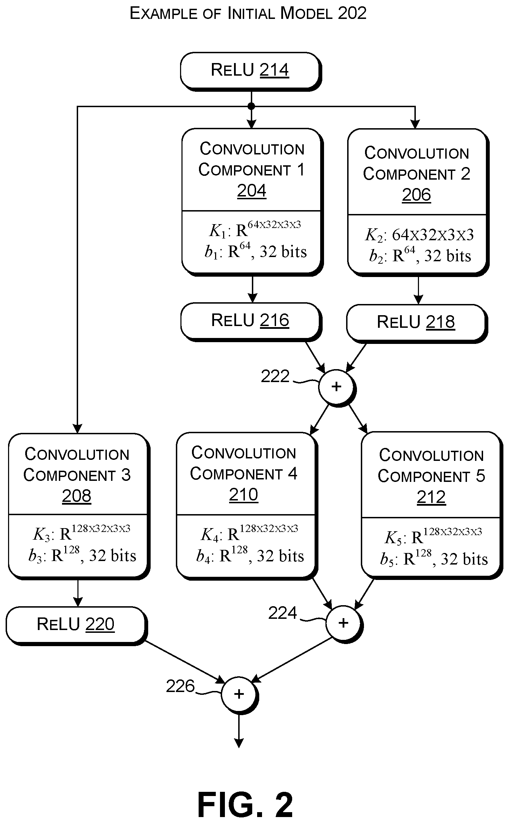

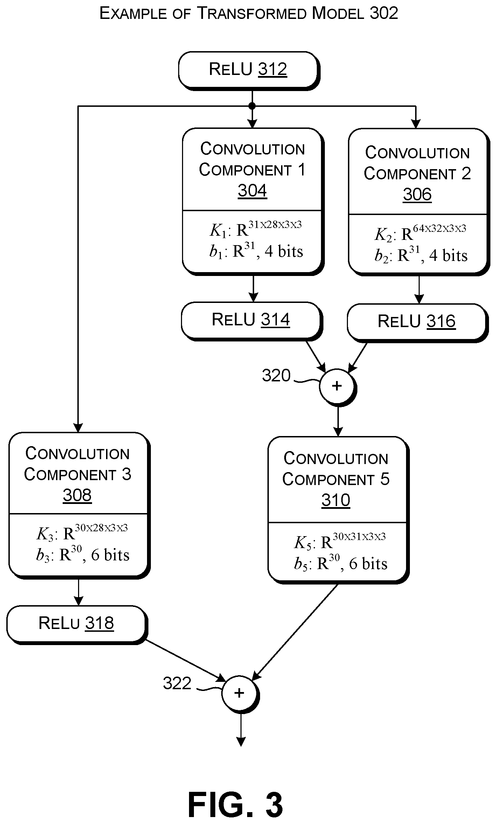

Fig. 2 shows an example of an initial model 202 (corresponding to the original neural network 104) and Fig. 3 shows an example of a final model 302 (corresponding to the final neural network 108) produced by the computing system 102. The original model 202 shown in Fig. 2 includes convolutional components (204, 206, 208, 210, 212) (abbreviated as "convolution" components in Fig. 2), ReLU units (214, 216, 218, 220), and summation components (222, 224, 226). Fig. 2 also provides information regarding an original size and bit width used by each component. For instance, the first convolutional component 204 has a filter having 64x32x3x3 weights and a bias vector of size 64. The first convolutional component 204 uses an original bit width of 32 bits for the filter weights.

The final model 302 includes convolutional components (304, 306, 308, 310), ReLU units (312, 314, 316, 318), and summation components (320, 322). The convolutional components (304, 306, 308, 310) are lower-sized counterparts of the convolutional components (204, 206, 208, 210, 212) of the original model 202. For example, the convolutional component 304 has a filter having 31x28x3x3 weights and a bias vector of size of 31. The computing system 102 also reduces the bit width of the convolutional component 304 relative to its original counterpart (the convolutional component 204), that is, from 32 bits to 4 bits. Note that the pruning applied by the computing system 102 entirely eliminates the third convolutional component 210 and the summation component 224 of the original model. More generally, note that the computing system 102 chooses an optimal combination of filter sizes and bit widths based on the results its iterative training. In doing so, the computing system 102 takes into account the complex relations between different components and the bit widths used by these components. This involves complex tradeoffs, as, for example, the pruning operation benefits from the use of larger bit widths to counteract the elimination of weight parameters. The quantization operation, on the other hand, seeks to reduce the bit widths of the layers

B. Producing a Quantized-Processed Neural Network

The quantizing-processing component 114 adds quantization logic to the original neural network 104, each instance of which simulates effects during training of a quantizing operation. That is, the quantization-processing component 114 adds an instance of weight-quantization logic to simulate effects of converting weight parameters used by a machine-trained component (e.g., a convolutional component) of the original neural network 104 into quantized weight parameters. The quantization-preprocessing component 114 adds an instance of activation-quantization logic to simulate effects of converting an activation output from a component of the original neural network 104 into quantized activation information.

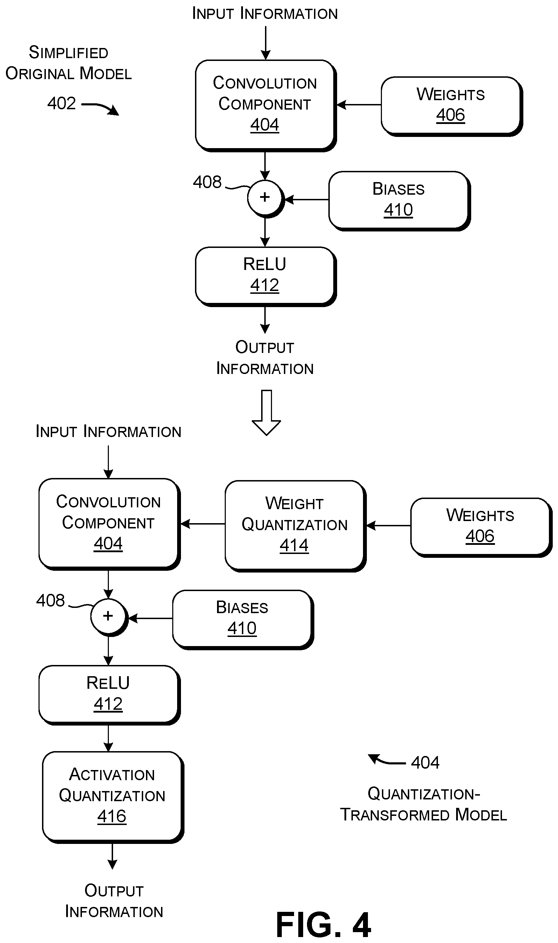

For example, Fig. 4 shows a simplified example of an original model 402 that includes a convolutional component 404 having a filter including weight parameters 406. The original model 402 also includes a summation component 408 that adds a bias vector 410 to an output of the convolutional component 404. The original model 402 also includes a ReLU unit 412 unit that converts the output of the summation component 408 to activation information, which constitutes the output of the original model 402.

The quantization-preprocessing component 114 adds weight quantization logic 414 that simulates effects of quantizing the weight parameters 406 that are fed into the convolutional component 404. The quantization-preprocessing component 114 adds activation quantization logic 416 that simulates effects of converting the activation provided by the ReLU unit 412 to quantized activation information. These instances of added logic (414, 416) can be referred to as "fake" quantization nodes, since they are artificially injected into the original model 402 for the purpose of conditioning the original model 402 to learn the quantization parameters during training. That is, each instance of quantization logic introduces the kind of quantization parameters described above into the original model 402, and the training process iteratively determines the values of these quantization parameters.

In some implementations, the quantization-preprocessing component 114 also restructures operations in the original model 402 to facilitate training performed by the joint PQ component 118. For instance, consider a batch normalization layer that performs a batch normalization operation given by:

$$output = \gamma \frac{z - \mu}{\sqrt{\sigma^2 + \epsilon}} + \beta, \text{where } z = Wx + b \quad (3).$$

In this expression, $\mu$ and $\sigma$ are the mean and standard deviation of the batch, respectively, $\epsilon$ is an error term, and $\gamma$ and $\beta$ are fixed parameters. The expression $z = Wx + b$ is an integrated convolutional operation in which $x$ is input information, $z$ is output information, $W$ is a weight matrix and $b$ is a bias vector. The quantization-preprocessing component 114 can use batch normalization folding to restructure the convolution operation using the modified weight parameters $W_{fold}$ and bias parameters $b_{fold}$ defined by:

$$W_{fold} = \gamma \frac{W}{\sqrt{\sigma^2 + \epsilon}}, \text{and } b_{fold} = \gamma \frac{b - \mu}{\sqrt{\sigma^2 + \epsilon}} + \beta \quad (4).$$

This operation effectively eliminates the batch normalization layer by folding its computations into the convolution operation itself. The quantization-preprocessing component 114 is able to process the modified convolution operation of Equation (3) more efficiently than the original batch normalization operation of Equation (2).

C. Identifying Candidate Groups

Fig. 5 shows a process 502 performed by the group-identifying component 116, the purpose of which is to identify groups of weight parameters, often abbreviated as just "weight groups" or "groups" in the explanation below. This process 502 is illustrative; in other implementations, the computing system 102 receives an identification of candidate groups produced by other algorithms. Alternatively, or in addition, a developer may manually specify the candidate groups. More generally, already-identified groups can be identified from any source(s), and a developer who seeks to prune an original neural network can omit the operations shown in Fig. 5.

The particular process 502 of Fig. 5 identifies zero-invariant structures in the original neural network 104. A zero-invariant structure is a structure that produces zero outputs to a following layer upon setting the trainable parameters of the structure to zero. Further, minimal zero-invariant structures are chosen, meaning that each such structure cannot be further decomposed into additional structures that satisfy the above constraint.

In block 504, the group-identifying component 116 receives an original trained neural network, referred to in Fig. 5 as an original unpruned model. In block 506, the group-identifying component 116 constructs a trace graph ($E, V$) of the model. A trace graph includes vertices V that represent respective components in the model and edges E that represent connections among the components. In some implementations, the vertices include stem vertices, accessory vertices, and unknown vertices. Stem vertices include trainable parameters that transform input tensors into output information having various shapes. Examples of stem vertices - which typically include most of the vertices in the trace graph - include convolutional layers and linear layers of the original model. Joint vertices establish the connections among different vertices. For instance, joint vertices perform the function of aggregating plural input tensors into a single instance of output information. Examples of joint vertices include add, multiply, and concatenation layers of the original model. Accessory vertices transform a single input tensor into a single instance of output information. Examples of accessory vertices include batch normalization layers and ReLU activation layers of the original model. Unknown vertices (the purpose of which is not recognized by the computing system 102 in advance) perform other functions in the original model than those specified above.

A joint vertex is said to be shape dependent (SD) if the vertex requires that its inputs have the same shape. Otherwise, the joint vertex is said to be shape-independent (SID). An example of a shape-dependent joint vertex is an add layer. An example of a shape-independent joint vertex is a convolutional layer.

In block 508, the group-identifying component 116 identifies adjacent accessory vertices, SD joint vertices, and unknown vertices in the model. This operation yields an initial set of components, which serve as skeletons for subsequent expansion.

In block 510, the candidate-group identifying component 116 grows the initial set of components into connected structures until all of the incoming vertices (which are vertices into the structures) are either stem or SID joint vertices. In block 512, the group-identifying component 116 merges the components of each expanded structure produced in block 510, to form respective node groups. In block 514, the candidate-group-identifying component 116 partitions the trainable parameters of the original model into weight groups, as guided by the node groups specified in block 512.

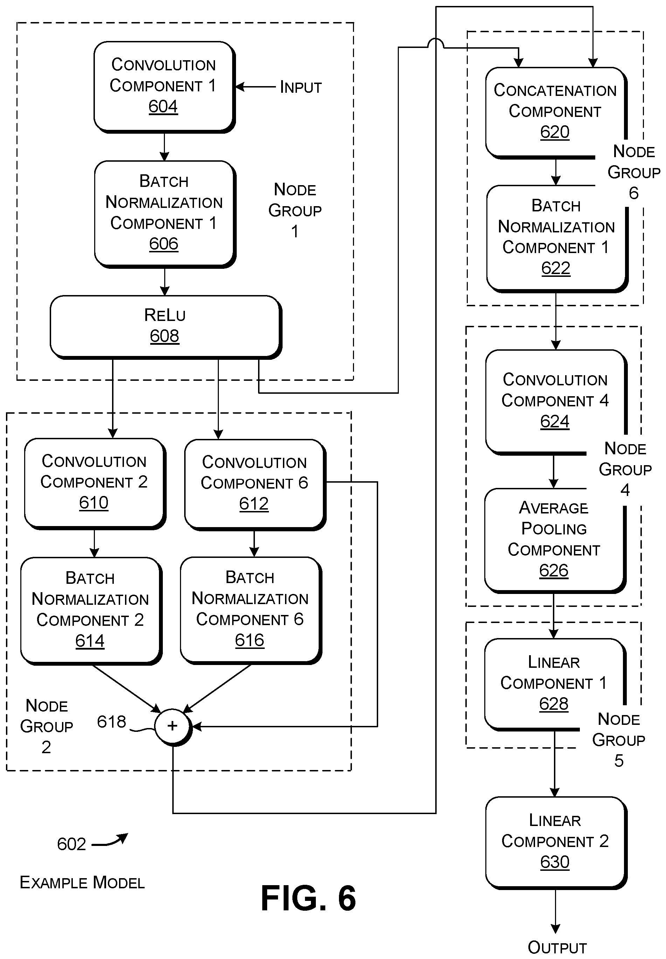

Fig. 6 shows an example of the operation of blocks 506-512 of Fig. 5, performed with respect to an original model 602. For simplicity of illustration, note that Fig. 6 omits the effects of the quantization-preprocessing component 114. The original model 602 is a multilevel neural network having various components 604-630, including convolutional components (604, 610, 612, and 624), batch normalization components (606, 614, 616, 622), linear components (628, 630), an ReLU (rectifier linear unit) component 608, a summation component 618, an average pooling component 626, and a concatenation component 620. The summation component 618 receives inputs from the batch normalization component 614, the batch normalization component 616, and the convolutional component 612. The concatenation component 620 receives inputs from the ReLU component 608 and the summation component 618.

In block 508, the group-identifying component 116 identifies accessory vertices, shape-dependent joint vertices, and unknown vertices, which serve as the skeletons for forming node groups. In the context of Fig. 6, these vertices include the batch normalization components (606, 614, 616, 622), the ReLU component 608, the summation component 618, and the average pooling component 626. In block 510, the group-identifying component 116 expands these seed components into nodes groups 1-5. For instance, the group-identifying component 116 establishes that the stem vertex associated with convolutional component 604 is affiliated with the accessory vertex for the batch normalization component 606 and the ReLU component 608. It also establishes that the stem vertices associated with the convolutional components (610, 612) are affiliated with the accessory vertices for the batch normalization components (614, 616).

The linear component 630 delivers the final output of the model 602. It has a fixed output which is not affiliated with any node group. Further, although not the case for the model 602 of Fig. 6, the group-identifying component 116 does not integrate any an unknown vertex into any node group for reasons of safety.

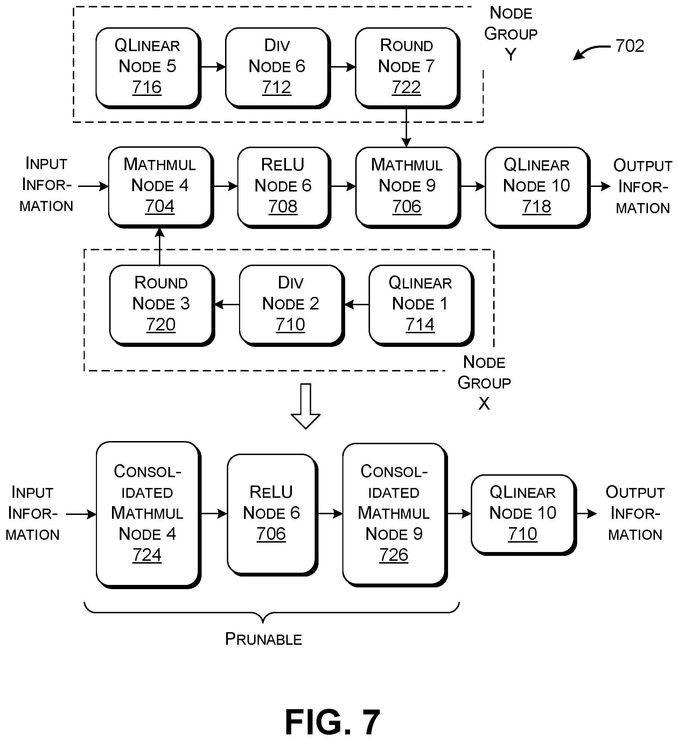

Fig. 7 shows the merging behavior of block 512 of Fig. 5, with respect to a model 702. The model 702 includes multiply components (704, 706), an ReLU component 708, division components (710, 712), quantization logic (714, 716, 718), and rounding nodes (720, 722). Assume that block 510 of the process 502 has identified two node groups, a node group X and a node group Y. In block 512, the group-identifying component 116 merges the operations of group X into the multiply component 704, to produce a consolidated multiply component 724. The group-identifying component 116 merges the operations of group Y into the multiply component 706, to produce a consolidated multiply component 726.

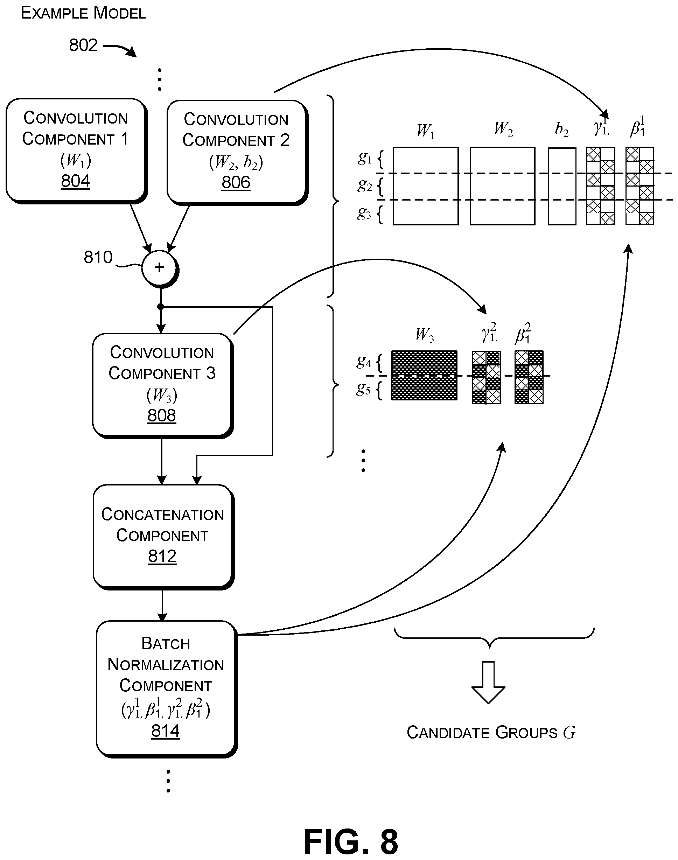

Fig. 8 shows an example of the operation of block 514 of Fig. 5, with respect to a component model 802 having convolutional components (804, 806, 808), a summation component 810, a concatenation component 812, and a batch normalization component 814. Assume that the convolutional components (804, 806) and the summation component 810 form a first node group, the convolutional component 808 forms a second node group, and the concatenation component 812 and the batch normalization component 814 have affiliations with both the first and second groups. In block 514, the group-identifying component 116 identifies three groups ($g_1$-$g_3$) of weight parameters based on the filter parameters ($W_1$, $W_2$) and the bias parameters ($b_2$) used by the convolutional components (804, 806). For example, group $g_1$ includes, in part, a first row of filter parameters used by the convolutional components (804, 806). The group-identifying component 116 identifies two groups ($g_4$ and g4) of weight parameters based on filter parameters ($W_3$) used by the convolutional component 808. The parameters ($\gamma, \beta$) attributed to the batch normalization component 814 are shown having a checkerboard pattern, which indicates that the batch normalization component 814 has parameters that attend to plural input sources. For instance, the batch normalization component 814 includes some weights and bias parameters ($\gamma_1^1, \beta_1^1$) that attend to the convolutional components (804, 806) of groups $g_1$-$g_3$, and some weights and bias parameters ($\gamma_1^2, \beta_1^2$) that attend to the convolutional component 808 of groups $g_4$ and $g_5$.

D. Joint Pruning and Quantization

Fig. 9 shows an overview of the joint PQ component 118 for an implementation that does not explicitly safeguard against the erroneous removal of redundant groups. The joint PQ component 118 includes a data store 902 that stores the identities of the redundant groups $G_R$ at each iteration of pruning. The joint PQ component 118 includes a data store 904 that stores the identities of the important groups $G_I$, which need not be separate from the data store 902. The joint PQ component 118 records these entries in any manner, e.g., by providing classification information in a master index of groups $G$. This information identifies the affiliation of each group $g$, e.g., by indicating whether it is currently classified as a redundant group or an important group.

Functionality 906 interacts with the data stores (902, 904) in an iterative manner. The functionality 906 includes a saliency-determining component 908 for determining the saliency of each candidate group. Saliency expresses the suitability of the candidate group for removal. More specifically, saliency estimates the impact that the removal of a group of parameters will have on the functions performed by the original neural network. Candidates that do not contribute in a significant way to the results produced by the original neural network are suitable for removal.

The saliency-determining component 908 uses one or more metrics to assess suitability for each candidate group. The saliency-determining component 908 can form a single saliency score $s_g$ for a group $g$ that is some combination of the group's component saliency scores, such as an average, a consensus, or a weighted consensus of the component saliency scores.

*Magnitude.* One saliency metric is the magnitude of trainable parameters in a group under consideration. The saliency-determining component 908 determines this metric by aggregating the magnitudes of the group in any manner. For instance, the saliency-determining component 908 generates the L2 norm $\|[x]_g\|_2$ of individual magnitudes in the group, wherein [x] generally denotes each weight parameter in a set, and $[x]_g$ denotes each weight parameter in a group $g$. $\|\cdot\|_2$ represents the L2 norm. The saliency-determining component 908 may optionally normalize the L2 norm based on a consideration of the L2 norms of all of the other groups. Heuristically, a low-magnitude group - and particularly a group with many parameters close to zero - is a more suitable candidate for removal than a higher-magnitude group. This is because a low-magnitude group contributes less to the output of a model compared to the higher-magnitude group.

*Average magnitude.* Another saliency metric is average magnitude, which measures the average magnitude within the group $g$. The saliency-determining component 908 may optionally normalize this metric with respect to the average magnitudes of other groups. Groups with low average magnitudes are more suitable candidates for removal compared to groups with higher average magnitudes for the same reason specified above. This metric is useful to prevent the size of a group from biasing the assessment of its saliency.

*Cosine Similarity.* Another saliency metric is the cosine similarity between the candidate group and the gradient direction of the objective function $f(x)$, expressed as $[x]_g^T[\nabla f(x)_g]/(\|[x]_g\|\|[\nabla f(x)_g]\|)$, where $T$ denotes transposition and $\|\cdot\|$ represents the vector norm and V is the gradient. A candidate group is a good candidate for removal when its cosine similarity score indicates that the projection of its parameters toward zero aligns with the descent direction of the objective function. This is because such a group is unlikely to significantly contribute to improving the model's performance during training, e.g., because it will not significantly decrease an objective function value.

*Taylor Series.* Another metric relies on the Taylor expansion to approximate the effects on the objective function of projecting a parameter group to zero. Various orders of the Taylor expansion are particularly useful in estimating the effects of small changes in the parameters on the objective function value. The first-order Taylor expansion is expressible as the dot product of the gradient of the objective function and the change in parameters ( $\left|[x]_g^T[\nabla f(x)]_g\right|$ ), which provides a linear approximation of the objective function around a current parameter point. The second-order Taylor expansion captures the curvature of the objective function using the second derivative of the objective function (

$$[x]_g^T[\nabla f(x)]_g + \frac{1}{2}[x]_g^T[\nabla^2 f(x)]_g[x]_g$$ ), and may be expressed using the Hessian matrix. A parameter group is a good candidate for removal if one or more of the Taylor series metrics indicates that the impact of setting the parameter group to zero is negligible.

The above saliency measures are set forth by way of illustration, not limitation. Other implementations use one or more other metrics to assess the importance of each parameter group and/or omit one or more of the metrics described above.

A set-updating component 910 relies on the saliency scores computed by the saliency-determining component 908 to determine the classification of candidate groups as either redundant or important. For example, the set-updating component 910 treats the candidate groups with the $K$ lowest saliency scores as redundant, and the remainder as important. The set-updating component 910 updates this assessment over the course of the pruning operation.

A parameter-updating component 912 updates each weight parameter $x$ from iteration $k$ to iteration $k + 1$.

Although not explicitly specified in the examples below, such an updating step follows a forward pass in which the neural network processes one or more training examples, to produce model-generated results. The objective function expresses the difference (loss) between the model-generated results and ground-truth results. The gradient of the objective function expresses the change of the function at a particular iteration k, with respect to each particular trainable parameter $x$. Different implementations can compute error information based on any quantity of training examples (a single example, a batch of examples, all examples, etc.). The parameter-updating component 912 also iteratively updates the quantization parameters that govern quantization in the different layers of the neural network.

Fig. 10 provides an overview of different stages in a pruning and quantization operation performed by the joint PQ component 118. In a warm-up stage 1002, the joint PQ component 118 trains a specified neural network without performing any pruning. This conditions and readies the neural network for pruning and quantization. The warm-up stage 1002 performs training of quantization parameters using a modified form of Stochastic Gradient Descent (SGD), referred to below as partially projected gradient descent (PPSG), which is explained below.

In a joint pruning and quantization stage 1004, the joint PQ component 118 iteratively performs pruning and quantization over plural pruning steps in an integrated manner. As will be described below, pruning includes identifying redundant groups and projecting these groups toward the origin point (e.g., zero) over plural steps. Pruning also transfers knowledge contained in the redundant groups to the important groups over plural steps. This is performed by further training the important groups to ensure that the retained parameters continue to satisfy the objective function. Quantization includes iteratively learning the quantization parameters injected into an original neural network via the quantization-preprocessing component 114. The quantization parameters govern the selection of bit widths in the various layers of the neural network.

In a post-pruning stage 1006, the joint PQ component 118 trains the retained important groups without also performing pruning. The post-pruning stage 1006 can use Stochastic Gradient Descent to perform training or any other technique. Other implementations vary the above-described stages in any manner, e.g., by omitting the warm-up stage 1002 and/or the post-pruning stage 1006, and/or by introducing additional stages not shown in Fig. 10.

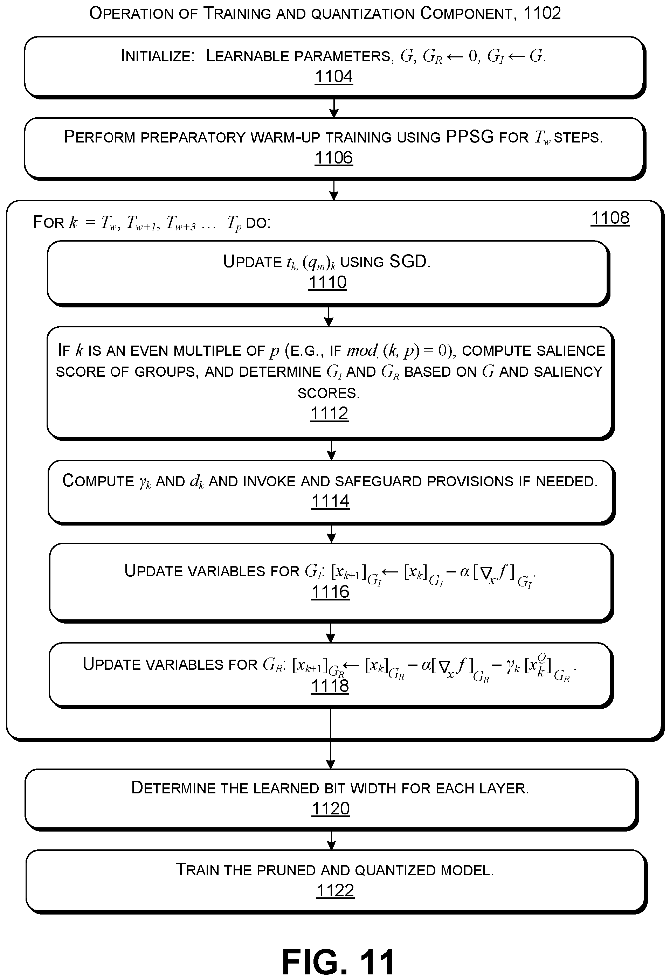

Fig. 11 is a process 1102 that describes the operation of one implementation of the joint PQ component 118. To facilitate explanation, this process 1102 is explained in the context in which the joint PQ component 118 learns quantization parameters that will govern the quantization of weights. The same approach is applicable to learning quantization parameters that will be used to determine the quantization of activations. That is, a single algorithm having the same steps, computations, and formulae can learn all quantization parameters in the same training operation, including weight quantization parameters and activation quantization parameters.

In block 1104, the joint PQ component 118 sets up various variables used in the process 1102. The joint PQ component 118 also initializes the redundant set of groups $G_R$ to zero members, and initializes the important set of groups $C_I$ to all of the candidate groups G.

In block 1106, the joint PQ component 118 performs warm-up training for $T_w$ steps using partially projected gradient descent. This step involves updates for learnable parameters $d$, $t$ $q_m$, and $x$. As will be explained below, with respect to the quantization parameters, this training is a variant of Stochastic Gradient Descent (SGD) in which an update to d is restricted to a surface defined by permissible values of the quantization step size d. The joint PQ component 118 applies standard SGD (meaning SGD without projection) for updating the weight parameters $x$.

In block 1108, the joint PQ component 118 performs training over plural steps, where $k$ is an individual step. In block 1110, the joint PQ component 118 updates the parameters $t$ and $q_m$ for step $k$ using Stochastic Gradient Descent. To repeat, these quantization parameters influence the selection of the bit width $b$ of weight parameters for each layer $i$, in accordance with Equation (1).

In block 1112, the joint PQ component 118 determines whether $k$ is an even multiple of a parameter $p$. For example, if $p$ is 5, then the joint PQ component 118 fires when k is 5, 10, 15, etc. On each such occasion, the joint PQ component 118 uses the saliency-determining component 908 to determine saliency scores of the groups $g$. The set-updating component 910 then updates the redundant groups $G_R$ and the important groups $G_I$ based on the saliency scores. For example, the joint PQ component 118 designates the groups having the $K$ lowest saliency scores as redundant groups, and the remainder of the groups $G$ as important groups $G_I$.

In block 1114, the joint PQ component 118 determines a forget rate y for step $k$ based on the following expression:

$$\gamma = \begin{cases} 1 - \dfrac{T_p - k - 1}{T_p - k} & \cos(\theta_\gamma) \geq 0 \\[2ex] -\dfrac{(1-\eta)\alpha \left\| [\nabla f(x)]_g \right\|}{\cos(\theta_\gamma) \left\| [\mathrm{sgn}(x) \cdot \mathrm{clip}_{q_m}^k(|x|)]_g \right\|} & \cos(\theta_\gamma) < 0 \end{cases} \qquad (5).$$

In this expression, $k$ is the current step ranging from step 0 to step $T_p$ - 1, $T_p$ is a setting that defines a total number of steps, $\alpha$ is a learning rate, and $\eta$ is a scaling hyper-parameter. sgn($x$) is a function that returns the sign of a weighting parameter $x$. $\text{clip}_{q_m}^{t}$ is a clipping function that returns a clipped value of $x$ bewteen $q_s$ and $q_m$ (defined in Equation (1)). $|\cdot|$ returns the absolute value, and $\|\cdot\|$ returns the vector norm. $\theta_\gamma$ is the angle between - $[\nabla f(x)]_g$ and $-[\text{sgn}(x) \cdot \text{clip}_{q_m}^{t}(|x|)]_g$. More generally, note that the forgetting rate y depends in part on the quantization parameters $t$ and $q_m$, which are determined in block 1110. As clarified below, the forget rate controls the rate at which redundant groups are projected to an origin point (e.g., zero). More simply stated, it is the rate at which information in the redundant groups is erased or forgotten.

For the condition $\cos(\theta_d) < 0$, the quantization step size $d$ is expressed by the following equation:

$$d \in \left( 0, -\frac{\eta\alpha \left\| [\nabla f(x)]_g \right\|}{\lambda \cos(\theta_d) \left\| [\text{sgn}(x) \cdot R(x)]_g \right\|} \right) \qquad (6).$$

Equation (6) states that d is an element between 0 and the term defined the quotient. $\theta_d$ is the angle between $-[\nabla f(x)]g$ and $-[\text{sgn}(x) \cdot d \cdot R(x)]_g$. $R(x_k)$, in turn, is given by:

$$R(x_k) = \text{sgn}(x_k) \cdot \begin{cases} 0, & \text{for } |x_k| < q_s \\ \left| \dfrac{(|x_k| - q_s)^t}{d} \right| - \dfrac{(|x_k| - q_s)^t}{d}, & \text{for } q_s \leq |x_k| \leq q_m \\ \left| \dfrac{(q_m - q_s)^t}{d} \right| - \dfrac{(q_m - q_s)^t}{d}, & \text{for } |x_k| > q_m \end{cases} \qquad (7).$$

The d used to compute $\theta_d$ and $R(x)$ in the above two equations is approximated as the d of the last iteration. For the condition $\cos(\theta_\gamma) \geq 0$, the variable $d$ can be any positive value, such that the computed bit width is within the permitted range defined by $b_L$ and $b_U$. In some implementations, $d$ is selected such that the bit width is equal to or near the lower bit width $b_L$.

In block 1114, the joint PQ component 118 also controls the output of Equations (4) and (5) such that they return values within permissible ranges. For instance, the bit width given for a layer $i$ given by Equation (1) is expected to fall within specified upper and lower bit width (e.g., $b_L \leq b_i \leq b_U$). The quantization variables that are learned (e.g., $t$ and $q_m$) may result in a bit width outside the permitted range. To prevent this from happening, the joint PQ component 118 applies a safeguard mechanism. That is, for the case of a bit width that is too small, the joint PQ component 118 decreases the size of quantization step size $d$ and increase the size of the forget rate $\gamma$. For case in which the bit width is too large, the joint PQ component 118 increases the quantization step size $d$ and keeps the forget rate $\gamma$ unchanged. In other words, the safeguard mechanism ensures that the bit width constraint for each layer is met while maintaining that the search direction $s(x_k)$ of an updating operation remains in a descent direction with respect to function $f$ at the point $x_k$.

In block 1116, the joint PQ component 118 updates the weight parameters in the important groups $G_I$ as follows:

$$[x_{k+1}]_{G_I} = [x_k]_{G_I} - \alpha[\nabla_x f]_{G_I} \qquad (8).$$

In other words, the current weight parameter $x_k$ at the current step is combined with the gradient of the objective function $f$ (modified by a learning parameter $\alpha$), to produce the parameter value $x_{k+1}$ at the next step. Again, $[x]$ generally refers to the weight parameters in a set, here the important groups. In block 1118, the joint PQ component 1118 updates the weight parameters of the redundant groups $G_R$ using:

$$[x_{k+1}]_{G_R} = [x_k]_{G_R} - \alpha[\nabla_x f]_{G_R} - \gamma_k[x_k^Q]_{G_R} \qquad (9).$$

In this equation, $\gamma$ is given by Equation (5) and $[x_k^Q]$ is given by Equation (2). Equation (9)'s use of the forget rate $\gamma$ has the effect of diminishing the value of the weight parameters in the redundant groups $G_R$ for each successive step $k$. In other words, the current weight parameter $x_k$ at the current step is combined with the gradient of the objective function $f$ (modified by a learning parameter $\alpha$), and is offset by the current weight parameter $x_k$ diminished by the forget rate $\gamma$. This

produces the parameter value $x_{k+1}$ at the next step.

Any useful information that may be lost in the removal of the redundant groups $G_R$ is recaptured in block 1116 by virtue of the update of the important groups $G_I$. That is, by updating the weight parameters of the important groups $G_I$, such that they continue to satisfy the objective function $f(x)$, the joint PQ component 118 overcomes any deficiencies in knowledge caused by the removal of the redundant groups $G_R$.

At the close of the iterative operations of block 1108, in block 1120, the joint PQ component 118 determines the bit width for each layer. The joint PQ component 118 performs this task based on the quantization parameters that were learned in block 1108, e.g., given Equation (1).

In block 1122, the joint PQ component 118 performs additional training of the pruned and quantized neural network produced in the preceding operations. In some implementations, the joint PQ component 118 performs this operation using Stochastic Gradient Descent applied to the important groups, without further pruning operations.

Overall, the process 1102 offers a controlled and integrated manner of performing pruning and quantization, balancing between the sometimes competing objectives of these two operations. This has the end result of increasing the extent of pruning and/or quantization applied to an original neural network. Alternatively, or in addition, the joint PQ component 118 improves the performance of the final neural network relative to other pruning and quantization techniques. The process 1102 also applies to many different kinds of neural networks without the need for special modification of its code, which promotes the scalability of the process 1102.

Additional details will now be provided regarding the calculation of gradients in the process 1102 of Fig. 11. First, consider the example in which the joint PQ component 118 converts a parameter $x$ into a quantized parameter $x_q$, given by:

$$x_q = \text{sgn}(x) \cdot \begin{cases} d \left\lfloor \dfrac{|x|^t}{d} \right\rceil, & \text{for } |x| \leq q_m \\[3mm] d \left\lfloor \dfrac{(q_m)^t}{d} \right\rceil, & \text{for } |x| > q_m \end{cases} \qquad (10).$$

This equation is equivalent to Equation (2), with $q_s$ (the lower quantization bound) set to zero. To repeat,

$$\lfloor \cdot \rceil$$

is a rounding operation that rounds to the nearest integer. The gradients with respect to the quantization parameters $d$, $q_m$, and $t$ are given by:

$$\nabla_d x_q = \begin{cases} \text{sgn}(x) \left( \left\lfloor \dfrac{|x|^t}{d} \right\rceil - \dfrac{|x|^t}{d} \right), & \text{for } |x| \leq q_m \\[3mm] \text{sgn}(x) \left( \left\lfloor \dfrac{(q_m)^t}{d} \right\rceil - \dfrac{(q_m)^t}{d} \right), & \text{for } |x| > q_m \end{cases} \qquad (11).$$

$$\nabla_{q_m} x_q = \begin{cases} 0, & \text{for } |x| \leq q_m \\ \text{sgn}(x) t (q_m)^{t-1}, & \text{for } |x| > q_m \end{cases} \qquad (12).$$

$$\nabla_t x_q = \begin{cases} 0, & \text{for } |x| = 0 \\ \text{sgn}(x)|x|^t \log(|x|), & \text{for } 0 < |x| \leq q_m \\ \text{sgn}(x)(q_m)^t \log(q_m), & \text{for } |x| > q_m \end{cases} \qquad (13).$$

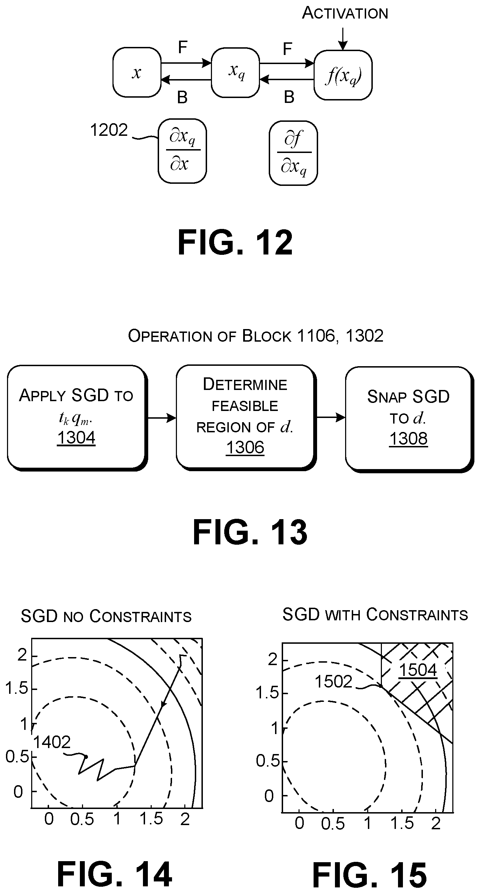

Rounding involved in quantizing operations introduces complexities in the computation of gradients. To address this issue, the joint PQ component 1118 applies the chain rule to calculate gradients. More specifically, Fig. 12 shows the relationship between a parameter $x$, its quantized counterpart $x_q$, and an objective function $f$ that uses the quantized parameter $x_q$. "F" represents the forward path of training and "B" represents the backward path of training. In the backward path, a straight-through estimator 1202, $\frac{\partial x_q}{\partial x} \approx 1$, is used to represent the gradient of $x_q$ with respect to $x$, and $\frac{\partial f}{x_q}$ represents the gradient of the objective function $f$ with respect to $x_q$. Given these relationships and the chain rule, the gradients $\frac{\partial f}{\partial x}, \frac{\partial f}{\partial t}, \frac{\partial f}{\partial d}$, and $\frac{\partial f}{\partial q_m}$ are given by:

$$\frac{\partial f}{\partial x} = \frac{\partial f}{\partial x_q}\frac{\partial x_q}{\partial x}, \frac{\partial f}{\partial t} = \frac{\partial f}{\partial x_q}\frac{\partial x_q}{\partial t}, \frac{\partial f}{\partial d} = \frac{\partial f}{\partial x_q}\frac{\partial x_q}{\partial d}, \frac{\partial f}{\partial q_m} = \frac{\partial f}{\partial x_q}\frac{\partial x_q}{\partial q_m} \quad (14).$$

Fig. 13 shows a process 1302 that summarizes the partially projected gradient descent (PPSG) operation performed in block 1106 of Fig. 11 for the quantization parameters. In block 1304, the joint PQ component 118 updates the quantization parameters $t$ and $q_m$ using Stochastic Gradient Descent (SGD). In block 1306, the joint PQ component 118 determines the feasible region of the quantization step size $d$. As previously explained, the joint PQ component 118 determines the feasible region using Equation (1), based on the given values of $t$ and $q_m$, and the bit width restrictions defined by $b_L \le b_i \le b_U$. In block 1308, the joint PQ component applies projected SGD to the permissible surface defined in block 1306 to the update the value of $d$, that is, by confining the value of $d$ to the feasible region defined in block 1306. The algorithm of Fig. 13 is predicated on the observation that among the quantized parameters ($t$, $q_m$, and $d$), $d$ has the greatest impact on determining bit width and therefore d has the greatest variability. The projection is regarded as partial because the joint PQ component 118 only projects some of the quantization variables to a permissible surface.

Fig. 14 shows an example of Stochastic Gradient Descent with no constraints. As shown, a training algorithm successively advances to the minima point 1402 over plural steps, without additional constraints on the path of descent. Fig. 15 shows an operation of projected gradient descent. Here, the joint PQ component 118 restricts the point of convergence 1502 to a permissible surface 1504.

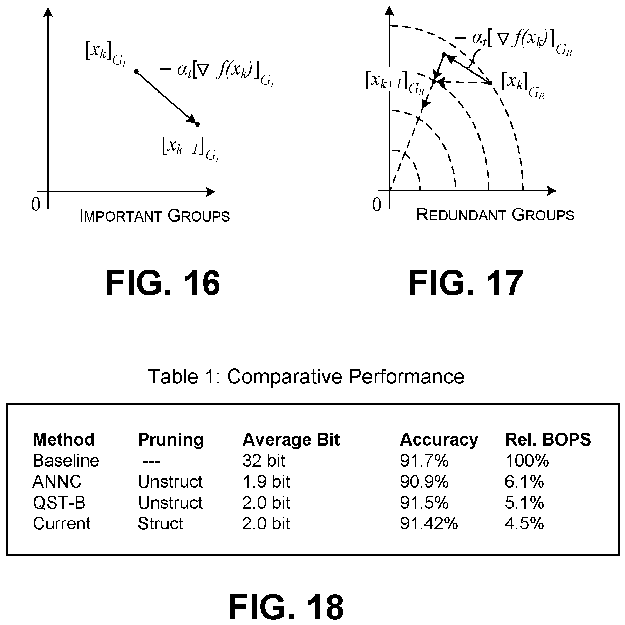

Fig. 16 shows an example of updating a weight parameter of an important group, e.g., showing the advancement from point $x_k$ to point $x_{k+1}$. Fig. 17 shows an example of the updating of a weight parameter of a redundant group from point $x_k$ to point $x_{x+1}$, showing the vector components of this advancement. Fig. 17 also demonstrates the effect that successive updates have on projecting the weight parameter $x_k$ to zero.

E. Illustrative Performance

Fig. 18 shows the performance of the computing system 102 of Fig. 1 compared to the uncompressed model, and compressed models produced by two other techniques. That is, "baseline" refers to the uncompressed model, which in this example is a ResNet type model. ANNC refers to an unstructured compression technique provided by Yang, et al., "Automatic Neural Network Compression by Sparsity-Quantization Joint Learning: A Constrained Optimization-based Approach," in Proceedings of the IEEE/CVF Conference on Computer Vision and Pattern Recognition, 2020, 11 pages. QST-B refers to another unstructured compression technique described in Park, et al., "Quantized Sparse Training: A Unified Trainable Framework for Joint Pruning and Quantization in DNNs," in ACM Transactions on Embedded Computing Systems (TECS), Vol. 21, Issue 5, Article No. 60, 22 pages. "Current" represents the performance of the computing system 102 of Fig. 1 that is described above.

The columns provide the average bit width across the layers of each model, the accuracy of the models in performing an inference task, and the average number of relative bit operations (BOPS) performed by each model. More specifically, the relative BOPs measure is defined as the number of BOPS generated by a compressed model divided by the number of BOPS produced the original model (e.g., which uses float weights and activations). The algorithm that performs the best will have the smallest relative BOPS measure. As shown, the computing system 102 of Fig. 1 achieves the smallest average bit width compared to the other models. The computing system 102 also has the smallest relative BOPS measure. The accuracy of the computing system 102 is comparable to the accuracy of the other models.

Additional information regarding the BOPS measure follows. Consider the $Lth$ layer of a model having an output feature map having a width, height, and number of channels denoted as $m_{w,L}$, $m_{h,L}$, and $c_L$, respectively. Let $k_w$ and $k_h$ be the kernel width and height. Let $p_L$ be the pruning ratio of the $Lth$ layer. A multiply- and-accumulate ($MAC$) measure for the layer is given by $MAC_L = (1 - p_{L-1}) \cdot C_{L-1} \cdot (1 - p_L) \cdot C_L \cdot m_{w,L} \cdot m_{h,L} \cdot k_w \cdot k_h$. The BOPS count for the layer is defined as $BOPS_L = MAC_L \cdot b_{w,L} \cdot b_{a,L-1}$, where $b_{w,L}$ and $b_{a,L}$ are the $Lth$ layer weight and activation bit width respectively. As noted above, relative BOPS is given by: $Rel\ BOPS = BOPS_{prune\_quant}/BOPS_{float}$. As opposed to the MAC metric, the BOPS metric captures both the total number of operations required for model inference and the bit width information.

F. Illustrative Flowcharts

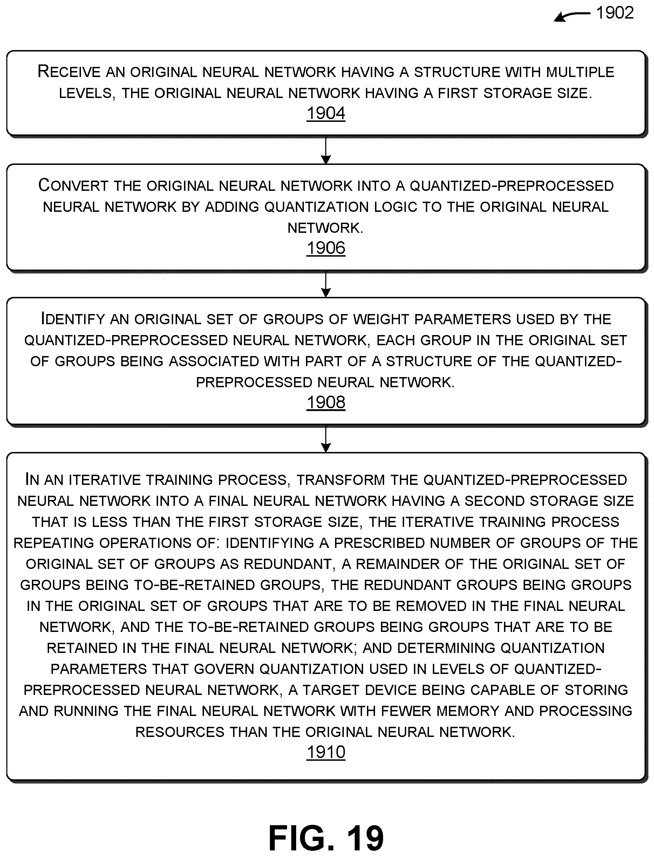

Figs. 19-23 represent three different aspects of the operation of the computing system 102 of Fig. 1. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 24 and 25.

More specifically, Fig. 19 shows a first process 1902 for pruning and quantizing a neural network. In block 1904, the computing system 102 receives an original neural network having a structure with multiple levels, the original neural network having a first storage size. In block 1906, the computing system 102 converts the original neural network into a quantized-preprocessed neural network by adding quantization logic to the original neural network. In block 1908, the computing system 102 identifies an original set of groups of weight parameters used by the quantized-preprocessed neural network, each group in the original set of groups being associated with part of a structure of the quantized-preprocessed neural network. In block 1910, the computing system 102, in an iterative training process, transforms the quantized-preprocessed neural network into a final neural network having a second storage size that is less than the first storage size. The iterative training process repeats operations of: identifying a prescribed number of groups of the original set of groups as redundant, a remainder of the original set of groups being to-be-retained groups, the redundant groups being groups in the original set of groups that are to be removed in the final neural network, and the to-be-retained groups being groups that are to be retained in the final neural network; and determining quantization parameters that govern quantization used in levels of quantized-preprocessed neural network. A target device is capable of storing and running the final neural network with fewer memory and processing resources than the original neural network

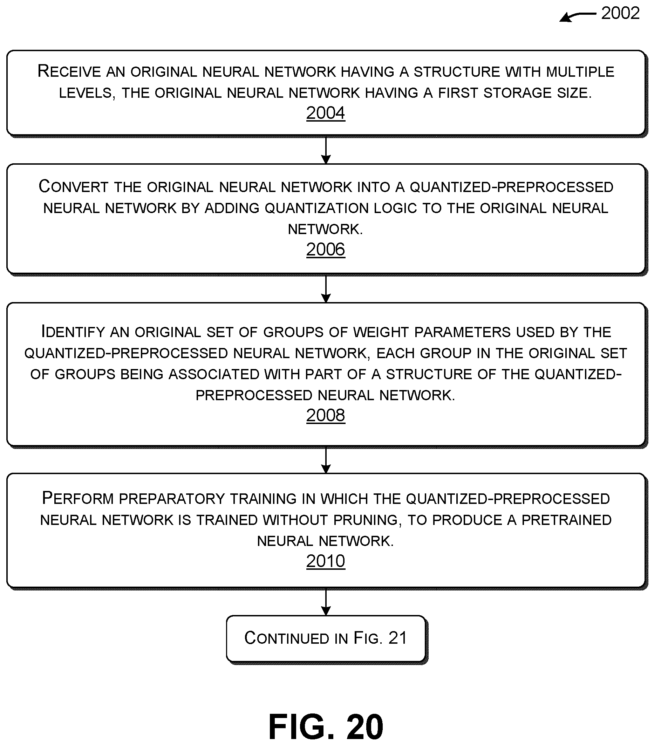

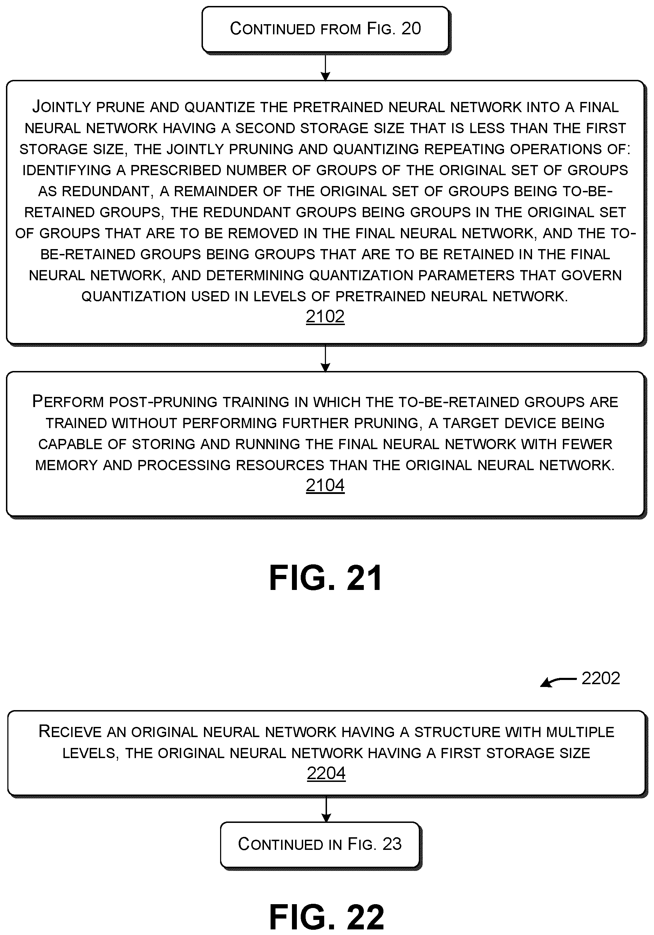

Figs. 20 and 21 show a second process 2002 for pruning and quantizing a neural network. In block 2004, the computing system 102 receives an original neural network having a structure with multiple levels, the original neural network having a first storage size. In block 2006, the computing system 102 converts the original neural network into a quantized-preprocessed neural network by adding quantization logic to the original neural network. In block 2008, the computing system 102 identifies an original set of groups of weight parameters used by the quantized-preprocessed neural network, each group in the original set of groups being associated with part of a structure of the quantized-preprocessed neural network. In block 2010, the computing system 102 performs preparatory training in which the quantized-preprocessed neural network is trained without pruning, to produce a pretrained neural network.

In block 2102 of Fig. 21, the computing system 102 jointly prunes and quantizes the pretrained neural network into a final neural network having a second storage size that is less than the first storage size. The jointly pruning and quantizing repeats operations of: identifying a prescribed number of groups of the original set of groups as redundant, a remainder of the original set of groups being to-be-retained groups, the redundant groups being groups in the original set of groups that are to be removed in the final neural network, and the to-be-retained groups being groups that are to be retained in the final neural network, and determining quantization parameters that govern quantization used in levels of pretrained neural network. In block 2104, after the joint pruning and quantization, the computing system 102 performs post-pruning training in which the to-be-retained groups are trained without performing further pruning. A target device is capable of storing and running the final neural network with fewer memory and processing resources than the original neural network

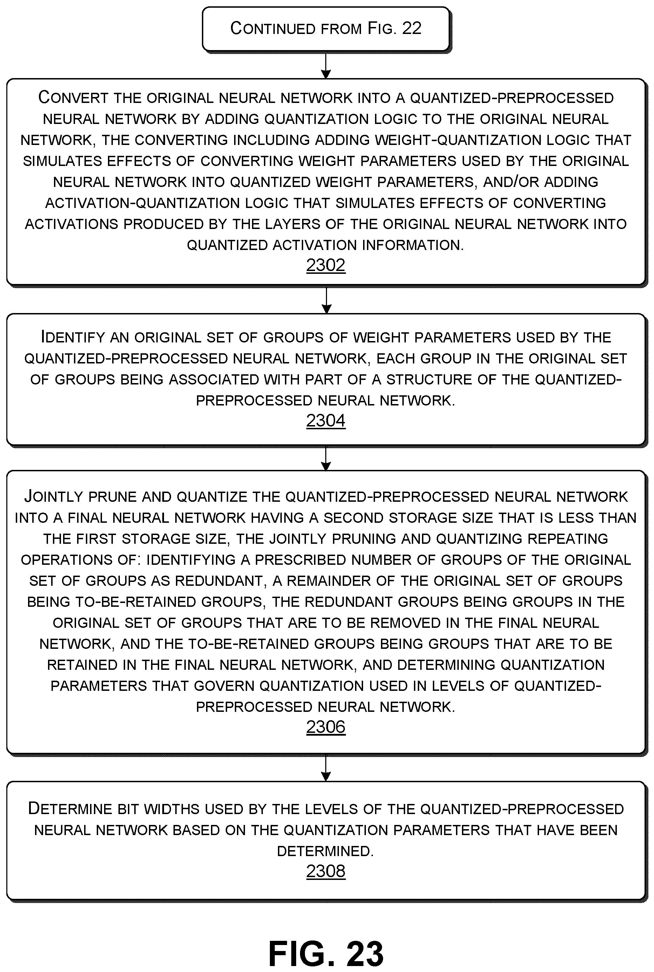

Figs. 22 and 23 show a third process 2202 for pruning and quantizing a neural network. In block 2204, the computing system 102 receives an original neural network having a structure with multiple levels, the original neural network having a first storage size. In block 2302 of Fig. 23, the computing system 102 converts the original neural network into a quantized-preprocessed neural network by adding quantization logic to the original neural network. The converting operation includes adding weight-quantization logic that simulates effects of converting weight parameters used by the original neural network into quantized weight parameters, and/or adding activation-quantization logic that simulates effects of converting activations produced by the layers of the original neural network into quantized activation information. In block 2304, the computing system 102 identifies an original set of groups of weight parameters used by the quantized-preprocessed neural network, each group in the original set of groups being associated with part of a structure of the quantized-preprocessed neural network. In block 2306, the computing system 102 jointly prunes and quantizes the quantized-preprocessed neural network into a final neural network having a second storage size that is less than the first storage size. The jointly pruning and quantizing repeats operations of: identifying a prescribed number of groups of the original set of groups as redundant, a remainder of the original set of groups being to-be-retained groups, the redundant groups being groups in the original set of groups that are to be removed in the final neural network, and the to-be-retained groups being groups that are to be retained in the final neural network, and determining quantization parameters that govern quantization used in levels of quantized-preprocessed neural network. In block 2308, after the joint pruning and quantization, the computing system 102 determines bit widths used by the levels of the final neural network based on the quantization parameters that have been determined.

G. Illustrative Computing Functionality

Fig. 24 shows computing equipment 2402 that, in some implementations, is used to implement the computing system 102. The computing equipment 2402 includes a set of local devices 2404 coupled to a set of servers 2406 via a computer network 2408. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, a vehicle-borne computing system, any type of robot computing system, a computing system in a manufacturing system, etc. In some implementations, the computer network 2408 is implemented as a local area network, a wide area network (e.g., the Internet), one or more point-to-point links, or any combination thereof.

The bottom-most overlapping box in Fig. 24 indicates that the functionality of the computing system 102 is capable of being spread across the local devices 2404 and/or the servers 2406 in any manner. In one example, the computing system 102 is entirely implemented by a local device. In another example, the functions of the computing system 102 are entirely implemented by the servers 2406. Here, a user is able to interact with the servers 2406 via a browser application running on a local device. In other examples, some of the functions of the computing system 102 are implemented by a local device, and other functions of the computing system 102 are implemented by the servers 2406.

Likewise, the pruned model itself is capable of being stored and executed on any local device, any network-accessible system device(s), or any combination thereof.

Fig. 25 shows a computing system 2502 that, in some implementations, is used to implement any aspect of the mechanisms set forth in the above-described figures. For instance, in some implementations, the type of computing system 2502 shown in Fig. 25 is used to implement any local computing device or any server shown in Fig. 24. In all cases, the computing system 2502 represents a physical and tangible processing mechanism.

The computing system 2502 includes a processing system 2504 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 2502 also includes computer-readable storage media 2506, corresponding to one or more computer-readable media hardware units. The computer-readable storage media 2506 retains any kind of information 2508, such as machine-readable instructions, settings, model weights, and/or other data. In some implementations, the computer-readable storage media 2506 includes one or more solid-state devices, one or more hard disks, one or more optical disks, etc. Any instance of the computer-readable storage media 2506 represents a fixed or removable unit of the computing system 2502. Further, any instance of the computer-readable storage media 2506 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 2502 utilizes any instance of the computer-readable storage media 2506 in different ways. For example, in some implementations, any instance of the computer-readable storage media 2506 represents a hardware memory unit (such as random access memory (RAM)) for storing information during execution of a program by the computing system 2502, and/or a hardware storage unit (such as a hard disk) for retaining/archiving information on a more permanent basis. In the latter case, the computing system 2502 also includes one or more drive mechanisms 2510 (such as a hard drive mechanism) for storing and retrieving information from an instance of the computer-readable storage media 2506.

In some implementations, the computing system 2502 performs any of the functions described above when the processing system 2504 executes computer-readable instructions stored in any instance of the computer-readable storage media 2506. For instance, in some implementations, the computing system 2502 carries out computer-readable instructions to perform each block of the processes described with reference to Figs. 19-23. Fig. 25 generally indicates that hardware logic circuitry 2512 includes any combination of the processing system 2504 and the computer-readable storage media 2506.

In addition, or alternatively, the processing system 2504 includes one or more other configurable logic units that perform operations using a collection of logic gates, such as field-programmable gate arrays (FPGAs), etc. In these implementations, the processing system 2504 effectively incorporates a storage device that stores computer-readable instructions, insofar as the configurable logic units are configured to execute the instructions and therefore embody or store these instructions.

In some cases (e.g., in the case in which the computing system 2502 represents a user computing device), the computing system 2502 also includes an input/output interface 2514 for receiving various inputs (via input devices 2516), and for providing various outputs (via output devices 2518). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 2520 and an associated graphical user interface presentation (GUI) 2522. The display device 2520 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 2502 also includes one or more network interfaces 2524 for exchanging data with other devices via one or more communication conduits 2526. One or more communication buses 2528 communicatively couple the above-described units together.

The communication conduit(s) 2526 is implemented in any manner, e.g., by a local area computer network, a wide area computer network (e.g., the Internet), point-to-point connections, or any combination thereof. The communication conduit(s) 2526 include any combination of hardwired links, wireless links, routers, gateway functionality, name servers, etc., governed by any protocol or combination of protocols.

Fig. 25 shows the computing system 2502 as being composed of a discrete collection of separate units. In some cases, the collection of units corresponds to discrete hardware units provided in a computing device chassis having any form factor. Fig. 25 shows illustrative form factors in its bottom portion. In other cases, the computing system 2502 includes a hardware logic unit that integrates the functions of two or more of the units shown in Fig. 25. For instance, in some implementations, the computing system 2502 includes a system on a chip (SoC or SOC), corresponding to an integrated circuit that combines the functions of two or more of the units shown in Fig. 25.

The following summary provides a set of illustrative examples of the technology set forth herein.

(A1) According to one aspect, a method (e.g., the process 1902) for pruning and quantizing a neural network is described. The method includes: receiving (e.g., in block 1904) an original neural network (e.g., the original neural network 104) having a structure with multiple levels, the original neural network having a first storage size; converting (e.g., in block 1906) the original neural network into a quantized-preprocessed neural network by adding quantization logic to the original neural network; identifying (e.g., in block 1908) an original set of groups of weight parameters used by the quantized-preprocessed neural network, each group in the original set of groups being associated with part of a structure of the quantized-preprocessed neural network; and in an iterative training process (e.g., in block 1910), transforming the quantized-preprocessed neural network into a final neural network having a second storage size that is less than the first storage size. The iterative training process repeats operations of: identifying a prescribed number of groups of the original set of groups as redundant, a remainder of the original set of groups being to-be-retained groups, the redundant groups being groups in the original set of groups that are to be removed in the final neural network, and the to-be-retained groups being groups that are to be retained in the final neural network; and determining quantization parameters that govern quantization used in levels of quantized-preprocessed neural network. A target device is capable of storing and running the final neural network with fewer memory and processing resources than the original neural network.

(A2) According to some implementations of the method of A1, each group in the original set of groups is associated with a group of one or more components in the original neural network, the group of one or more components having been determined to produce zero outputs upon setting weight parameters in the group of one or more components to zero.

(A3) According to some implementations of the method A1 or A2, the converting involves adding weight-quantization logic that simulates effects of converting weight parameters used by the original neural network into quantized weight parameters.

(A4) According to some implementations of any of the methods A1-A3, the converting involves adding activation-quantization logic that simulates effects of converting activations produced by the layers of the original neural network into quantized activation information.

(A5) According to some implementations of any of the methods A1-A4, the method further includes determining bit widths used by the levels of the final neural network based on the quantization parameters that have been determined.

(A6) According to some implementations of any of the methods A1-A5, some of the quantization parameters that are determined govern bit widths of quantized weights used in the final neural network.

(A7). According to some implementations of any of the methods A1-A6, some of the quantization parameters that are determined govern bit widths of activation information generated by the final neural network.

(A8). According to some implementations of any of the methods A1-A7, the iterative training process is preceded by preparatory training in which the original neural network is trained without pruning. A bit width of a particular layer of the quantized-preprocessed neural network is dependent on plural learned quantization parameters, including an upper-limit quantization parameter that describes a maximum quantization value, a quantization step size that expresses a size between two neighboring quantization values, and an exponent that controls a shape of quantization. The preparatory training updates the upper-limit quantization parameter and the exponent, determines a region defined by permissible quantization step sizes, and updates the quantization size based on the region.

(A9). According to some implementations of any of the methods A1-A8, the iterative training process is followed by post-pruning training in which the to-be-retained groups are trained without performing further pruning.

(A10). According to some implementations of any of the methods A1-A9, the iterative training process includes determining that a particular group is a redundant group based on a saliency score associated with the particular group, the saliency score measuring an impact of the particular group on functions performed by the original neural network.

(A11). According to some implementations of any of the methods A1-A11, the iterative training process includes successively projecting the redundant groups to an origin point and successively transferring information contained in the redundant groups to the to-be-retained groups.

(A12). According to some implementations of the method of A11, projecting is governed by a forget rate, the forget rate depending on the quantization parameters.

(A13). According to some implementations of any of the methods A1-A2, the method further includes storing the final neural network in a storage device of the target device.

In yet another aspect, some implementations of the technology described herein include a computing system (e.g., the computing system 2502) that includes a processing system (e.g., the processing system 2504) having a processor. The computing system also includes a storage device (e.g., the computer-readable storage media 2506) for storing computer-readable instructions (e.g., the information 2508). The processing system executes the computer-readable instructions to perform any of the methods described herein (e.g., any individual method of the methods of A1-A13).

In yet another aspect, some implementations of the technology described herein include a computer-readable storage medium (e.g., the computer-readable storage media 2506) for storing computer-readable instructions (e.g., the information 2508). A processing system (e.g., the processing system 2504) executes the computer-readable instructions to perform any of the operations described herein (e.g., the operations in any individual method of the methods of A1-A13).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any features described as alternative ways of carrying out identified functions or implementing identified mechanisms are also combinable together in any combination, unless otherwise noted.

In terms of specific terminology, the phrase "configured to" encompasses various physical and tangible mechanisms for performing an identified operation. The mechanisms are configurable to perform an operation using the hardware logic circuitry 2512 of Fig. 25. The term "logic" likewise encompasses various physical and tangible mechanisms for performing a task. For instance, each processing-related operation illustrated in the flowcharts of Figs. 19-23 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method (1902) for pruning and quantizing a neural network, comprising:

   receiving (1904) an original neural network (104) having a structure with multiple levels, the original neural network (104) having a first storage size;
   converting (1906) the original neural network (104) into a quantized-preprocessed neural network by adding quantization logic to the original neural network (104);
   identifying (1908) an original set of groups of weight parameters used by the quantized-preprocessed neural network, each group in the original set of groups being associated with part of a structure of the quantized-preprocessed neural network; and
   in an iterative training process, transforming (1910) the quantized-preprocessed neural network into a final neural network (108) having a second storage size that is less than the first storage size, the iterative training process repeating operations of:

   identifying a prescribed number of groups of the original set of groups as redundant, a remainder of the original set of groups being to-be-retained groups,
   the redundant groups being groups in the original set of groups that are to be removed in the final neural network, and the to-be-retained groups being groups that are to be retained in the final neural network; and
   determining quantization parameters that govern quantization used in levels of quantized-preprocessed neural network,
   a target device (112) being capable of storing and running the final neural network (108) with fewer memory and processing resources than the original neural network (104).

2. The method of claim 1, wherein each group in the original set of groups is associated with a group of one or more components in the original neural network, the group of one or more components having been determined to produce zero outputs upon setting weight parameters in the group of one or more components to zero.

3. The method of claim 1 or 2 , wherein the converting involves at least one of:

   (i) adding weight-quantization logic that simulates effects of converting weight parameters used by the original neural network into quantized weight parameters;
   (ii) adding activation-quantization logic that simulates effects of converting activations produced by the layers of the original neural network into quantized activation information.

4. The method of any one of claims 1 to 3, further comprising at least one of:

   (i) determining bit widths used by the levels of the final neural network based on the quantization parameters that have been determined;
   (ii) storing the final neural network in a storage device of the target device.

5. The method of any one of claims 1 to 4, wherein some of the quantization parameters that are determined are provided by at least one of the following:

   (i) some of the quantization parameters that are determined govern bit widths of quantized weights used in the final neural network;
   (ii) some of the quantization parameters that are determined govern bit widths of activation information generated by the final neural network.

6.  The method of any one of claims 1 to 5,

    wherein the iterative training process is preceded by preparatory training in which the original neural network is trained without pruning,

    wherein a bit width of a particular layer of the quantized-preprocessed neural network is dependent on plural learned quantization parameters, including an upper-limit quantization parameter that describes a maximum quantization value, a quantization step size that expresses a size between two neighboring quantization values, and an exponent that controls a shape of quantization, and

    wherein the preparatory training updates the upper-limit quantization parameter and the exponent, determines a region defined by permissible quantization step sizes, and updates the quantization size based on the region.

7.  The method of any one of claims 1 to 6, wherein the iterative training process is provided by at least one of the following:

    (i) the iterative training process is followed by post-pruning training in which the to-be-retained groups are trained without performing further pruning;

    (ii) the iterative training process includes determining that a particular group is a redundant group based on a saliency score associated with the particular group, the saliency score measuring an impact of the particular group on functions performed by the original neural network.

8.  The method of any one of claims 1 to 7, wherein the iterative training process includes successively projecting the redundant groups to an origin point and successively transferring information contained in the redundant groups to the to-be-retained groups.

9.  The method of claim 8, wherein the projecting is governed by a forget rate, the forget rate depending on the quantization parameters.

10. A computing system for pruning and quantizing a neural network, comprising:

    an instruction data store for storing computer-readable instructions; and

    a processing system for executing the computer-readable instructions in the data store, to perform operations including:

    receiving an original neural network having a structure with multiple levels, the original neural network having a first storage size;

    converting the original neural network into a quantized-preprocessed neural network by adding quantization logic to the original neural network;

    identifying an original set of groups of weight parameters used by the quantized-preprocessed neural network, each group in the original set of groups being associated with part of a structure of the quantized-preprocessed neural network; and

    performing preparatory training in which the quantized-preprocessed neural network is trained without pruning, to produce a pretrained neural network;

    jointly pruning and quantizing the pretrained neural network into a final neural network having a second storage size that is less than the first storage size, the jointly pruning and quantizing repeating operations of:

    identifying a prescribed number of groups of the original set of groups as redundant, a remainder of the original set of groups being to-be-retained groups,

    the redundant groups being groups in the original set of groups that are to be removed in the final neural network, and the to-be-retained groups being groups that are to be retained in the final neural network, and

    determining quantization parameters that govern quantization used in levels of pretrained neural network; and

    after the jointly pruning and quantizing, performing post-pruning training in which the to-be-retained groups are trained without performing further pruning,

    a target device being capable of storing and running the final neural network with fewer memory and processing resources than the original neural network.

11. The computing system of claim 10, wherein the converting involves at least one of the following:

(i) adding weight-quantization logic that simulates effects of converting weight parameters used by the original neural network into quantized weight parameters;
(ii) adding activation-quantization logic that simulates effects of converting activations produced by the layers of the original neural network into quantized activation information.

12. The computing system of claim 10 or 11,

wherein a bit width of a particular layer of the quantized-preprocessed neural network is dependent on plural learned quantization parameters, including an upper-limit quantization parameter that describes a maximum quantization value, a quantization step size that expresses a size between two neighboring quantization values, and an exponent that controls a shape of quantization, and
wherein the preparatory training updates the upper-limit quantization parameter and the exponent, determines a region defined by permissible quantization step sizes, and updates the quantization size based on the region.

13. The computing system of any one of claims 10 to 12,

wherein some of the quantization parameters that are determined govern bit widths of quantized weights used in the final neural network, and/or
wherein some of the quantization parameters that are determined govern bit widths of activation information generated by the final neural network.

14. The computing system of any one of claims 10 to 13, wherein the jointly pruning and quantizing includes successively projecting the redundant groups to an origin point and successively transferring information contained in the redundant groups to the to-be-retained groups;
optionally wherein the projecting is governed by a forget rate, the forget rate depending on identified quantization parameters.

15. A computer-readable storage medium for storing computer-readable instructions that, when executed by a processing system, perform the method according to any one of claims 1 to 9.

MEMORY 110

ORIGINAL NEURAL
NETWORK (NN) 104
(SIZE = S1)

COMPUTING
SYSTEM

102

PRUNING AND QUANTIZATION
SYSTEM 106

QUANTIZATION-PREPROCESSING COMPONENT 114
(SEE FIG. 4)

QUANTIZED-PREPROCESSED NN

GROUP-IDENTIFYING COMPONENT 116
(SEE FIGS. 5-8)

ORIGINAL GROUPS

JOINT PRUNING AND QUANTIZATION (PQ) COMPONENT 118
(SEE FIGS 9-18)

MODEL COMPRESSING COMPONENT 120

MEMORY 110

FINAL NEURAL NETWORK
108
(SIZE = S1)

112

FIG. 1

EXAMPLE OF INITIAL MODEL 202

ReLU 214

CONVOLUTION
COMPONENT 1
204

$K_1$: $R^{64 \times 32 \times 3 \times 3}$
$b_1$: $R^{64}$, 32 bits

CONVOLUTION
COMPONENT 2
206

$K_2$: 64X32X3X3
$b_2$: $R^{64}$, 32 bits

ReLU 216

ReLU 218

222 +

CONVOLUTION
COMPONENT 3
208

$K_3$: $R^{128 \times 32 \times 3 \times 3}$
$b_3$: $R^{128}$, 32 bits

CONVOLUTION
COMPONENT 4
210

$K_4$: $R^{128 \times 32 \times 3 \times 3}$
$b_4$: $R^{128}$, 32 bits

CONVOLUTION
COMPONENT 5
212

$K_5$: $R^{128 \times 32 \times 3 \times 3}$
$b_5$: $R^{128}$, 32 bits

ReLU 220

224 +

226 +

FIG. 2

EXAMPLE OF TRANSFORMED MODEL 302

RELU 312

CONVOLUTION
COMPONENT 1
304

$K_1$: $R^{31 \times 28 \times 3 \times 3}$
$b_1$: $R^{31}$, 4 bits

CONVOLUTION
COMPONENT 2
306

$K_2$: $R^{64 \times 32 \times 3 \times 3}$
$b_2$: $R^{31}$, 4 bits

RELU 314

RELU 316

320 $+$

CONVOLUTION
COMPONENT 3
308

$K_3$: $R^{30 \times 28 \times 3 \times 3}$
$b_3$: $R^{30}$, 6 bits

CONVOLUTION
COMPONENT 5
310

$K_5$: $R^{30 \times 31 \times 3 \times 3}$
$b_5$: $R^{30}$, 6 bits

RELU 318

322 $+$

**FIG. 3**

FIG. 4

OPERATION OF GROUP-IDENTIFYING COMPONENT, 502

QUANTIZATION-PREPROCESSED MODEL

INPUT ORIGINAL (UNPRUNED) MODEL.
504

CONSTRUCT A TRACE GRAPH OF THE MODEL.
506

FIND NODE GROUPS OVER ALL ACCESSORY, SHAPE-DEPENDENT JOINT, AND UNKNOWN VERTICES.
508

GROW THE IDENTIFIED NODE GROUPS UNTIL INCOMING NODES ARE EITHER STEM OR SHAPE-INDEPENDENT JOINT VERTICES.
510

MERGE THE NODE GROUPS.
512

DEFINE GROUPS OF WEIGHT PARAMETERS BASED ON THE NODE GROUPS.
514

CANDIDATE GROUPS $G$

# FIG. 5

CONVOLUTION
COMPONENT 1
604 ← INPUT

BATCH
NORMALIZATION
COMPONENT 1
606

NODE
GROUP
1

ReLu
608

CONVOLUTION
COMPONENT 2
610

CONVOLUTION
COMPONENT 6
612

BATCH
NORMALIZATION
COMPONENT 2
614

BATCH
NORMALIZATION
COMPONENT 6
616

NODE
GROUP
2

618 +

CONCATENATION
COMPONENT
620

NODE
GROUP
6

BATCH
NORMALIZATION
COMPONENT 1
622

CONVOLUTION
COMPONENT 4
624

NODE
GROUP
4

AVERAGE
POOLING
COMPONENT
626

LINEAR
COMPONENT 1
628

NODE
GROUP
5

LINEAR
COMPONENT 2
630

OUTPUT

602

EXAMPLE MODEL

# FIG. 6

NODE
GROUP
Y
← 702

```
┌─────────────────────────────────────────────────────┐
│  ┌──────────┐    ┌──────────┐    ┌──────────┐        │
│  │ QLINEAR  │    │   DIV    │    │  ROUND   │        │
│  │ NODE 5   │──▶ │ NODE 6   │──▶ │ NODE 7   │        │
│  │   716    │    │   712    │    │   722    │        │
│  └──────────┘    └──────────┘    └──────────┘        │
└─────────────────────────────────────────────────────┘
```

INPUT
INFOR-
MATION →

MATHMUL NODE 4 704 → ReLU NODE 6 708 → MATHMUL NODE 9 706 → QLINEAR NODE 10 718 →

OUTPUT
INFOR-
MATION

```
┌─────────────────────────────────────────────────────┐
│  ┌──────────┐    ┌──────────┐    ┌──────────┐        │
│  │  ROUND   │    │   DIV    │    │ QLINEAR  │        │
│  │ NODE 3   │◀── │ NODE 2   │◀── │ NODE 1   │        │
│  │   720    │    │   710    │    │   714    │        │
│  └──────────┘    └──────────┘    └──────────┘        │
└─────────────────────────────────────────────────────┘
```

NODE
GROUP
X

INPUT
INFOR-
MATION →

CONSOL-IDATED MATHMUL NODE 4 724 → ReLU NODE 6 706 → CONSOL-IDATED MATHMUL NODE 9 726 → QLINEAR NODE 10 710 →

OUTPUT
INFOR-
MATION

PRUNABLE

# FIG. 7

EXAMPLE MODEL

FIG. 8

JOINT PRUNING AND QUANTIZATION (PQ) COMPONENT 118

TOTAL CANDIDATE GROUPS $G$

902

REDUNDANT
GROUPS, $G_R$

□□□ • • • □

IMPORTANT
GROUPS, $G_I$

□□□ • • • □□□

904

SALIENCY-DETERMINING
COMPONENT
908

PARAMETER-UPDATING
COMPONENT
912

$s_1, s_2, • • • s_n$
SALIENCY SCORES

SET-UPDATING
COMPONENT
910

ITERATIVELY INVOKED
FUNCTIONALITY
906

## FIG. 9

| WARM-UP TRAINING 1002 | JOINT PRUNING AND QUANTIZATION (P&Q) 1004 | POST-P&Q TRAINING 1006 |

TIME

## FIG. 10

OPERATION OF TRAINING AND QUANTIZATION COMPONENT, 1102

INITIALIZE: LEARNABLE PARAMETERS, $G$, $G_R \leftarrow 0$, $G_I \leftarrow G$.
1104

PERFORM PREPARATORY WARM-UP TRAINING USING PPSG FOR $T_w$ STEPS.
1106

FOR $k = T_w, T_{w+1}, T_{w+3} \ldots T_p$ DO: 1108

UPDATE $t_k, (q_m)_k$ USING SGD.
1110

IF $k$ IS AN EVEN MULTIPLE OF $p$ (E.G., IF $mod,(k, p) = 0$), COMPUTE SALIENCE SCORE OF GROUPS, AND DETERMINE $G_I$ AND $G_R$ BASED ON $G$ AND SALIENCY SCORES.
1112

COMPUTE $\gamma_k$ AND $d_k$ AND INVOKE AND SAFEGUARD PROVISIONS IF NEEDED.
1114

UPDATE VARIABLES FOR $G_I$: $[x_{k+1}]_{G_I} \leftarrow [x_k]_{G_I} - \alpha [\nabla_x f]_{G_I}$.
1116

UPDATE VARIABLES FOR $G_R$: $[x_{k+1}]_{G_R} \leftarrow [x_k]_{G_R} - \alpha [\nabla_x f]_{G_R} - \gamma_k [x_k^Q]_{G_R}$.
1118

DETERMINE THE LEARNED BIT WIDTH FOR EACH LAYER.
1120

TRAIN THE PRUNED AND QUANTIZED MODEL.
1122

# FIG. 11

ACTIVATION

$x$ →F→ $x_q$ →F→ $f(x_q)$
$x$ ←B← $x_q$ ←B← $f(x_q)$

1202 ~ $\dfrac{\partial x_q}{\partial x}$   $\dfrac{\partial f}{\partial x_q}$

## FIG. 12

OPERATION OF BLOCK 1106, 1302

APPLY SGD TO $t_k q_m$. → DETERMINE FEASIBLE REGION OF $d$. → SNAP SGD TO $d$.
1304    1306    1308

## FIG. 13

SGD NO CONSTRAINTS

1402

SGD WITH CONSTRAINTS

1502    1504

## FIG. 14    FIG. 15

$[x_k]_{G_I}$

$-\alpha_t[\nabla f(x_k)]_{G_I}$

$[x_{k+1}]_{G_I}$

IMPORTANT GROUPS

## FIG. 16

$-\alpha_t[\nabla f(x_k)]_{G_R}$

$[x_{k+1}]_{G_R}$

$[x_k]_{G_R}$

REDUNDANT GROUPS

## FIG. 17

Table 1: Comparative Performance

| Method | Pruning | Average Bit | Accuracy | Rel. BOPS |
|--------|---------|-------------|----------|-----------|
| Baseline | --- | 32 bit | 91.7% | 100% |
| ANNC | Unstruct | 1.9 bit | 90.9% | 6.1% |
| QST-B | Unstruct | 2.0 bit | 91.5% | 5.1% |
| Current | Struct | 2.0 bit | 91.42% | 4.5% |

## FIG. 18

1902

RECEIVE AN ORIGINAL NEURAL NETWORK HAVING A STRUCTURE WITH MULTIPLE LEVELS, THE ORIGINAL NEURAL NETWORK HAVING A FIRST STORAGE SIZE.
1904

CONVERT THE ORIGINAL NEURAL NETWORK INTO A QUANTIZED-PREPROCESSED NEURAL NETWORK BY ADDING QUANTIZATION LOGIC TO THE ORIGINAL NEURAL NETWORK.
1906

IDENTIFY AN ORIGINAL SET OF GROUPS OF WEIGHT PARAMETERS USED BY THE QUANTIZED-PREPROCESSED NEURAL NETWORK, EACH GROUP IN THE ORIGINAL SET OF GROUPS BEING ASSOCIATED WITH PART OF A STRUCTURE OF THE QUANTIZED-PREPROCESSED NEURAL NETWORK.
1908

IN AN ITERATIVE TRAINING PROCESS, TRANSFORM THE QUANTIZED-PREPROCESSED NEURAL NETWORK INTO A FINAL NEURAL NETWORK HAVING A SECOND STORAGE SIZE THAT IS LESS THAN THE FIRST STORAGE SIZE, THE ITERATIVE TRAINING PROCESS REPEATING OPERATIONS OF: IDENTIFYING A PRESCRIBED NUMBER OF GROUPS OF THE ORIGINAL SET OF GROUPS AS REDUNDANT, A REMAINDER OF THE ORIGINAL SET OF GROUPS BEING TO-BE-RETAINED GROUPS, THE REDUNDANT GROUPS BEING GROUPS IN THE ORIGINAL SET OF GROUPS THAT ARE TO BE REMOVED IN THE FINAL NEURAL NETWORK, AND THE TO-BE-RETAINED GROUPS BEING GROUPS THAT ARE TO BE RETAINED IN THE FINAL NEURAL NETWORK; AND DETERMINING QUANTIZATION PARAMETERS THAT GOVERN QUANTIZATION USED IN LEVELS OF QUANTIZED-PREPROCESSED NEURAL NETWORK, A TARGET DEVICE BEING CAPABLE OF STORING AND RUNNING THE FINAL NEURAL NETWORK WITH FEWER MEMORY AND PROCESSING RESOURCES THAN THE ORIGINAL NEURAL NETWORK.
1910

# FIG. 19

2002

RECEIVE AN ORIGINAL NEURAL NETWORK HAVING A STRUCTURE WITH MULTIPLE LEVELS, THE ORIGINAL NEURAL NETWORK HAVING A FIRST STORAGE SIZE.
2004

CONVERT THE ORIGINAL NEURAL NETWORK INTO A QUANTIZED-PREPROCESSED NEURAL NETWORK BY ADDING QUANTIZATION LOGIC TO THE ORIGINAL NEURAL NETWORK.
2006

IDENTIFY AN ORIGINAL SET OF GROUPS OF WEIGHT PARAMETERS USED BY THE QUANTIZED-PREPROCESSED NEURAL NETWORK, EACH GROUP IN THE ORIGINAL SET OF GROUPS BEING ASSOCIATED WITH PART OF A STRUCTURE OF THE QUANTIZED-PREPROCESSED NEURAL NETWORK.
2008

PERFORM PREPARATORY TRAINING IN WHICH THE QUANTIZED-PREPROCESSED NEURAL NETWORK IS TRAINED WITHOUT PRUNING, TO PRODUCE A PRETRAINED NEURAL NETWORK.
2010

CONTINUED IN FIG. 21

FIG. 20

CONTINUED FROM FIG. 20

JOINTLY PRUNE AND QUANTIZE THE PRETRAINED NEURAL NETWORK INTO A FINAL NEURAL NETWORK HAVING A SECOND STORAGE SIZE THAT IS LESS THAN THE FIRST STORAGE SIZE, THE JOINTLY PRUNING AND QUANTIZING REPEATING OPERATIONS OF: IDENTIFYING A PRESCRIBED NUMBER OF GROUPS OF THE ORIGINAL SET OF GROUPS AS REDUNDANT, A REMAINDER OF THE ORIGINAL SET OF GROUPS BEING TO-BE-RETAINED GROUPS, THE REDUNDANT GROUPS BEING GROUPS IN THE ORIGINAL SET OF GROUPS THAT ARE TO BE REMOVED IN THE FINAL NEURAL NETWORK, AND THE TO-BE-RETAINED GROUPS BEING GROUPS THAT ARE TO BE RETAINED IN THE FINAL NEURAL NETWORK, AND DETERMINING QUANTIZATION PARAMETERS THAT GOVERN QUANTIZATION USED IN LEVELS OF PRETRAINED NEURAL NETWORK.
2102

PERFORM POST-PRUNING TRAINING IN WHICH THE TO-BE-RETAINED GROUPS ARE TRAINED WITHOUT PERFORMING FURTHER PRUNING, A TARGET DEVICE BEING CAPABLE OF STORING AND RUNNING THE FINAL NEURAL NETWORK WITH FEWER MEMORY AND PROCESSING RESOURCES THAN THE ORIGINAL NEURAL NETWORK.
2104

# FIG. 21

2202

RECIEVE AN ORIGINAL NEURAL NETWORK HAVING A STRUCTURE WITH MULTIPLE LEVELS, THE ORIGINAL NEURAL NETWORK HAVING A FIRST STORAGE SIZE
2204

CONTINUED IN FIG. 23

# FIG. 22

CONTINUED FROM FIG. 22

CONVERT THE ORIGINAL NEURAL NETWORK INTO A QUANTIZED-PREPROCESSED NEURAL NETWORK BY ADDING QUANTIZATION LOGIC TO THE ORIGINAL NEURAL NETWORK, THE CONVERTING INCLUDING ADDING WEIGHT-QUANTIZATION LOGIC THAT SIMULATES EFFECTS OF CONVERTING WEIGHT PARAMETERS USED BY THE ORIGINAL NEURAL NETWORK INTO QUANTIZED WEIGHT PARAMETERS, AND/OR ADDING ACTIVATION-QUANTIZATION LOGIC THAT SIMULATES EFFECTS OF CONVERTING ACTIVATIONS PRODUCED BY THE LAYERS OF THE ORIGINAL NEURAL NETWORK INTO QUANTIZED ACTIVATION INFORMATION.
2302

IDENTIFY AN ORIGINAL SET OF GROUPS OF WEIGHT PARAMETERS USED BY THE QUANTIZED-PREPROCESSED NEURAL NETWORK, EACH GROUP IN THE ORIGINAL SET OF GROUPS BEING ASSOCIATED WITH PART OF A STRUCTURE OF THE QUANTIZED-PREPROCESSED NEURAL NETWORK.
2304

JOINTLY PRUNE AND QUANTIZE THE QUANTIZED-PREPROCESSED NEURAL NETWORK INTO A FINAL NEURAL NETWORK HAVING A SECOND STORAGE SIZE THAT IS LESS THAN THE FIRST STORAGE SIZE, THE JOINTLY PRUNING AND QUANTIZING REPEATING OPERATIONS OF: IDENTIFYING A PRESCRIBED NUMBER OF GROUPS OF THE ORIGINAL SET OF GROUPS AS REDUNDANT, A REMAINDER OF THE ORIGINAL SET OF GROUPS BEING TO-BE-RETAINED GROUPS, THE REDUNDANT GROUPS BEING GROUPS IN THE ORIGINAL SET OF GROUPS THAT ARE TO BE REMOVED IN THE FINAL NEURAL NETWORK, AND THE TO-BE-RETAINED GROUPS BEING GROUPS THAT ARE TO BE RETAINED IN THE FINAL NEURAL NETWORK, AND DETERMINING QUANTIZATION PARAMETERS THAT GOVERN QUANTIZATION USED IN LEVELS OF QUANTIZED-PREPROCESSED NEURAL NETWORK.
2306

DETERMINE BIT WIDTHS USED BY THE LEVELS OF THE QUANTIZED-PREPROCESSED NEURAL NETWORK BASED ON THE QUANTIZATION PARAMETERS THAT HAVE BEEN DETERMINED.
2308

# FIG. 23

2404

2406

COMPUTER NETWORK
2408

LOCAL DEVICE

SERVER

COMPUTING SYSTEM 102

2402

# FIG. 24

OUTPUT DEVICE(S) 2518

HARDWARE LOGIC CIRCUITRY
2512

DISPLAY DEVICE
2520

GUI
2522

PROCESSING SYSTEM
2504
(INCLUDING ANY OF
CPU(S), GPU(S),
ASIC(S), CONFIGURABLE
LOGIC UNIT(S), ETC.)

COMMUN-
ICATION
CONDUIT(S)
2526

I/O
2514

2528

NETWORK
INTER-
FACE(S)
2524

INPUT
DEVICE(S)
2516

COMPUTER-READABLE
STORAGE MEDIA, E.G.,
2506

INSTRUCTIONS,
DATA,
SETTINGS, ETC.
2508

DRIVE
MECHANISMS
2510

2502

COMPUTING SYSTEM

FOR
EXAMPLE:

GAME

"CAVE"

SERVER

# FIG. 25

Europäisches
Patentamt

European
Patent Office

Office européen
des brevets

# EUROPEAN SEARCH REPORT

**Application Number**

EP 25 20 0406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEATRICE ALESSANDRA MOTETTI ET AL: "Joint Pruning and Channel-wise Mixed-Precision Quantization for Efficient Deep Neural Networks", ARXIV.ORG, CORNELL UNIVERSITY LIBRARY, 201 OLIN LIBRARY CORNELL UNIVERSITY ITHACA, NY 14853, 1 July 2024 (2024-07-01), XP091806043, * page 1 - page 11 * * figures 1-3 * | 1-15 | INV. G06N3/0495 G06N3/0464 G06N3/084 |
| A | TUNG FREDERICK ET AL: "CLIP-Q: Deep Network Compression Learning by In-parallel Pruning-Quantization", 2018 IEEE/CVF CONFERENCE ON COMPUTER VISION AND PATTERN RECOGNITION, IEEE, 18 June 2018 (2018-06-18), pages 7873-7882, XP033473708, DOI: 10.1109/CVPR.2018.00821 [retrieved on 2018-12-14] * page 7873 - page 7877 * * figures 1,2 * | 1-15 | |
| A | US 2021/089922 A1 (LU YADONG [US] ET AL) 25 March 2021 (2021-03-25) * paragraph [0001] - paragraph [0090] * | 1-15 | TECHNICAL FIELDS SEARCHED (IPC) G06N |
| A | LIANG TAILIN ET AL: "Pruning and quantization for deep neural network acceleration: A survey", ARXIV,, vol. 461, 21 July 2021 (2021-07-21), pages 370-403, XP086797049, DOI: 10.1016/J.NEUCOM.2021.07.045 [retrieved on 2021-07-21] * the whole document * | 1-15 | |

The present search report has been drawn up for all claims

| Place of search | Date of completion of the search | Examiner |
|---|---|---|
| The Hague | 15 January 2026 | Keresztury, Bence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

**EP 4 708 143 A1**

## ANNEX TO THE EUROPEAN SEARCH REPORT
## ON EUROPEAN PATENT APPLICATION NO.

EP 25 20 0406

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | Publication date | Patent family member(s) | Publication date |
|---|---|---|---|
| US 2021089922 A1 | 25-03-2021 | US 2021089922 A1 | 25-03-2021 |
| | | WO 2021062029 A1 | 01-04-2021 |

EPO FORM P0459

For more details about this annex : see Official Journal of the European Patent Office, No. 12/82

38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG et al.** Automatic Neural Network Compression by Sparsity-Quantization Joint Learning: A Constrained Optimization-based Approach. *Proceedings of the IEEE/CVF Conference on Computer Vision and Pattern Recognition*, 2020, 11

- **PARK et al.** Quantized Sparse Training: A Unified Trainable Framework for Joint Pruning and Quantization in DNNs. *ACM Transactions on Embedded Computing Systems (TECS)*, vol. 21 (5), 22